# EUROPEAN PATENT APPLICATION

(11) **EP 4 654 565 A1**
(43) Date of publication of application: **26.11.2025**
(21) Application number: 24890225.6
(22) Date of filing: 13.08.2024
(51) Int. Cl.: H04M 1/02

(54) **FOLDABLE MECHANISM AND FOLDABLE TERMINAL**

(30) Priority: 17.11.2023 CN 202311537019
(71) Applicant: Honor Device Co., Ltd., Shenzhen, Guangdong 518040 (CN)
(72) Inventor: HUANG, Shengxian, Shenzhen, Guangdong 518040 (CN); DONG, Shaohong, Shenzhen, Guangdong 518040 (CN); LIU, Xiaodong, Shenzhen, Guangdong 518040 (CN); CHEN, Ruihao, Shenzhen, Guangdong 518040 (CN)
(74) Representative: Goddar, Heinz J.
(86) International application number: PCT/CN2024/111769
(87) International publication number: WO 2025/102862

(57) **Abstract**

This application provides a foldable mechanism and a foldable terminal. A support plate is an integrally formed structural member, so that overall strength and rigidity of the support plate can be ensured while light and thin design of the foldable mechanism is implemented, thereby ensuring overall strength of the foldable mechanism, and improving use reliability of the foldable mechanism. In addition, the support plate is fixedly mounted on a base, so that the support plate does not float up or down relative to the base as the foldable mechanism moves. Therefore, the support plate can always provide a display with strong support, and a support area and support force of the foldable mechanism for the display can be increased, thereby improving pressing and touching experience of a user on the display, and further improving anti-fall and anti-impact reliability of the display.

## Description

This application claims priority to Chinese Patent Application No. 202311537019.5, filed with the China National Intellectual Property Administration on November 17, 2023 and entitled "FOLDABLE MECHANISM AND FOLDABLE TERMINAL", which is incorporated herein by reference in its entirety.

### TECHNICAL FIELD

This application relates to the technical field of foldable terminals, and in particular, to a foldable mechanism and a foldable terminal.

### BACKGROUND

With the progress of science and technology, an era of large-screen smart terminals is coming, and foldable terminals are favored by users because of advantages such as large screens and convenient portability. Currently, a foldable terminal usually uses a foldable mechanism to implement folding and unfolding, and uses a support plate of the foldable mechanism to support a display of the foldable terminal. However, because the foldable terminal tends to be designed to be light and thin, strength of the support plate is continuously reduced, resulting in reduction of overall strength of the foldable mechanism, and an impact on use reliability of the foldable mechanism.

### SUMMARY

This application provides a foldable mechanism and a foldable terminal, to enhance strength of a support plate and ensure overall strength of the foldable mechanism, thereby improving use reliability of the foldable mechanism.

According to a first aspect, this application provides a foldable mechanism, including a base, a support plate, and a first main swing arm, where the support plate is an integrally formed structural member, the support plate is fixedly mounted on the base, the first main swing arm includes a first sliding part, and the first sliding part is slidably and rotatably connected to the support plate.

In the foldable mechanism shown in this application, the support plate is an integrally formed structural member, so that overall strength and rigidity of the support plate can be ensured while light and thin design of the foldable mechanism is implemented, thereby ensuring overall strength of the foldable mechanism, and improving use reliability of the foldable mechanism. In addition, the support plate is fixedly mounted on the base, so that the support plate does not float up or down relative to the base as the foldable mechanism moves. Therefore, the support plate can always provide a display with strong support, and a support area and support force of the foldable mechanism for the display can be increased, thereby improving pressing and touching experience of a user on the display, and further improving anti-fall and anti-impact reliability of the display.

In an implementation, a first mounting notch is disposed on the support plate, and the first mounting notch runs through the support plate in a thickness direction of the support plate.

The first sliding part is mounted in the first mounting notch, and may slide and rotate relative to the support plate in the first mounting notch. A first clearance notch is disposed on the first sliding part, the first clearance notch runs through the first sliding part in a thickness direction of the first sliding part, a first stopping block is further disposed on the first sliding part, the first stopping block is disposed on a bottom surface of the first sliding part and is spaced from the first clearance notch, the first stopping block includes a first stopping surface, and the first stopping surface faces the first clearance notch.

A first stopping arm is disposed on the base, the first stopping arm extends into the first mounting notch, the first stopping arm includes a second stopping surface, and the second stopping surface faces a bottom side of the base.

When the first main swing arm is unfolded relative to the base, the first clearance notch is communicated with the first mounting notch, and the first stopping arm further extends into the first clearance notch.

When the first main swing arm is folded relative to the base, the first clearance notch is spaced from the first mounting notch, and the first stopping surface abuts against the second stopping surface.

In the foldable mechanism shown in this application, the first stopping arm is designed on the base, and the first stopping block is designed on the first main swing arm, to implement a stopping function of the first main swing arm through fitting between the first stopping arm and the first stopping block, thereby enhancing strength of the first stopping block in a limited space, and ensuring assembly convenience and precision of the base, the support plate, and the first main swing arm.

In an implementation, the first mounting notch includes a first bottom wall surface, and the first bottom wall surface faces an opening of the first mounting notch.

A first slider is further disposed on the support plate, and the first slider is disposed on the first bottom wall surface. A first avoidance chute and a first avoidance notch are disposed on the first slider. An opening of the first avoidance chute is located on a top surface of the first slider, and the first avoidance chute avoids the first stopping block, to prevent the first slider from affecting movement of the first sliding part in the first mounting notch, thereby ensuring smooth movement of the foldable mechanism. The first avoidance notch runs through the first slider in a thickness direction of the first slider, and is communicated with the first avoidance chute and the first mounting notch.

The first stopping arm further extends into the first avoidance notch, the first avoidance notch is further communicated with the first clearance notch when the first main swing arm is unfolded relative to the base, and the first stopping block extends into the first avoidance notch when the first main swing arm is folded relative to the base.

In an implementation, the first mounting notch further includes two first sidewall surfaces, the two first sidewall surfaces are spaced apart and disposed opposite to each other in a length direction of the support plate, and the first bottom wall surface is connected between the two first sidewall surfaces.

The first slider is located between the two first sidewall surfaces and is spaced from the two first sidewall surfaces.

Two second sliders are further disposed on the support plate, and each of the first sliders is disposed on one of the first sidewall surfaces and is spaced from the first slider.

The first sliding part is slidably and rotatably connected to the first slider and the two second sliders.

In the foldable mechanism shown in this application, the second slider and the first slider are designed on the support plate to implement slidable and rotatable connection between the support plate and the first main swing arm, so that there is no assembly error between shapes and sizes of the second slider and the first slider of the support plate and a position and a size of the first main swing arm, that is, so that there is no assembly error between a shape and a size of a virtual swing arm chute of the support plate and a position and a size of a virtual swing arm, thereby precisely controlling a movement track of the foldable mechanism, and improving use reliability of the foldable mechanism.

In an implementation, a first reinforcement rib is further disposed on the support plate, and the first reinforcement rib is located between one of the first sidewall surfaces and the first slider and is fixedly connected between the first bottom wall surface and the first slider, to enhance strength at the first mounting notch of the support plate.

In an implementation, a length of the first reinforcement rib gradually increases in a direction from the opening of the first mounting notch to the first bottom wall surface. The first reinforcement rib can enhance strength of the support plate, and prevent the first reinforcement rib from affecting movement of the first main swing arm in the first mounting notch, thereby ensuring smooth movement of the foldable mechanism.

In an implementation, the first reinforcement rib is spaced from the second slider in the length direction of the support plate, to prevent the first reinforcement rib from affecting movement of the first sliding part in the first mounting notch, thereby ensuring smooth movement of the foldable mechanism.

In an implementation, a first reinforcement block is further disposed on the support plate, the first reinforcement block is disposed on a bottom surface of the support plate, the first reinforcement block includes two first surfaces, the two first surfaces face away from each other in the length direction of the support plate, and projections of the two first surfaces on a top surface of the support plate are located on two opposite sides that are respectively of the two first sidewall surfaces and that are opposite to each other, and are spaced from the two first sidewall surfaces. The first reinforcement block can enhance strength at the first mounting notch of the support plate, thereby enhancing overall strength and rigidity of the support plate.

In an implementation, there are at least two first reinforcement ribs, and two of the first reinforcement ribs are respectively connected to two opposite sides of the first slider in the length direction of the support plate.

The first reinforcement block includes two reinforcement sub-blocks, the two reinforcement sub-blocks are respectively connected to the two opposite sides of the first slider in the length direction of the support plate, each of the reinforcement sub-blocks includes one of the first surfaces and a second surface, the first surface faces away from the first slider, the second surface and the first surface face away from each other in the length direction of the support plate, and a projection of the second surface on the support plate is located in the first slider. The first reinforcement block can enhance strength at the first mounting notch of the support plate, thereby enhancing overall strength and rigidity of the support plate.

In an implementation, the base includes a shaft cover and a first bracket, a mounting groove is disposed on the shaft cover, an opening of the mounting groove is located on a top surface of the shaft cover, the first bracket is mounted in the mounting groove, a first fastening hole is disposed on the first bracket, and the first fastening hole runs through the first bracket in a thickness direction of the first bracket.

The support plate is fixedly mounted on top sides of the shaft cover and the first bracket, a second fastening hole is disposed on the support plate, an opening of the second fastening hole is located on the bottom surface of the support plate, and in the length direction of the support plate, and the second fastening hole is located between the two reinforcement sub-blocks, is spaced from the two reinforcement sub-blocks, and is communicated with the first fastening hole.

The foldable mechanism further includes a first fastener, and the first fastener passes through the first fastening hole and the second fastening hole and is fixedly connected to the first bracket and the support plate, to implement assembly of the support plate and the first bracket.

The first reinforcement block and the support plate may form a stepped structure around the second fastening hole, and the first reinforcement block may enhance strength at the first mounting notch and a second mounting notch of the support plate, thereby enhancing overall strength and rigidity of the support plate.

In an implementation, the shaft cover includes a first side edge and a second side edge, and the first side edge and the second side edge are respectively located on two opposite sides of the mounting groove in a width direction of the shaft cover.

A first side rib and a second side rib are disposed on the support plate, the first side rib and the second side rib are respectively disposed on two opposite sides of the support plate in a width direction of the support plate, the first side rib is lap-jointed with the first side edge, and the second side rib is lap-jointed with the second side edge.

The first side rib and the second side rib are designed to enhance overall strength and rigidity of the support plate, and further improve assembly stability between the support plate and the base, thereby enhancing overall strength and rigidity of the foldable mechanism, and improving use reliability of the foldable mechanism.

In an implementation, a first positioning hole is further disposed on the support plate, and an opening of the first positioning hole is located on the bottom surface of the support plate.

A first positioning column is disposed on the first bracket, and the first positioning column is disposed on a top surface of the first bracket and passes through the first positioning hole, to implement quick positioning between the support plate and the first bracket.

In an implementation, a second reinforcement block is disposed on the first bracket, and the second reinforcement block is disposed on the top surface of the first bracket. The second reinforcement block is designed to increase a thickness of the first bracket, thereby enhancing overall strength and rigidity of the first bracket.

A first avoidance groove is disposed on the second reinforcement block, and an opening of the first avoidance groove is located on a top surface of the second reinforcement block. The first avoidance groove avoids the first sliding part, to prevent the first bracket from affecting movement of the first sliding part relative to the support plate, thereby ensuring smooth movement of the first sliding part relative to the support plate.

In an implementation, the base further includes a second bracket, and the second bracket is mounted in the mounting groove and is spaced from the first bracket. A third fastening hole is disposed on the second bracket, and the third fastening hole runs through the second bracket in a thickness direction of the second bracket.

The support plate is fixedly mounted on a top side of the second bracket. A fourth fastening hole is further disposed on the support plate, and an opening of the fourth fastening hole is located on the bottom surface of the support plate.

The foldable mechanism further includes a second fastener, and the second fastener passes through the third fastening hole and the fourth fastening hole and is fixedly connected to the second bracket and the support plate, to implement assembly between the support plate and the second bracket.

In an implementation, a second positioning hole is further disposed on the support plate, and an opening of the second positioning hole is located on the bottom surface of the support plate.

A second positioning column is disposed on the second bracket, and the second positioning column is disposed on a top surface of the second bracket and passes through the second positioning hole, to implement quick positioning between the support plate and the second bracket.

In an implementation, a third positioning hole is disposed on the first bracket, and an opening of the third positioning hole is located on a bottom surface of the first bracket.

A third positioning column is disposed on the shaft cover, and the third positioning column is disposed on a groove bottom wall surface of the mounting groove and passes through the third positioning hole, to implement quick positioning between the shaft cover and the first bracket.

In an implementation, the mounting groove includes a first groove sidewall surface and a second groove sidewall surface, and the first groove sidewall surface and the second groove sidewall surface are spaced apart and disposed opposite to each other in the width direction of the shaft cover.

A first anti-torsion block and a second anti-torsion block are disposed on the shaft cover, the first anti-torsion block is disposed on the first groove sidewall surface and is spaced from the second groove sidewall surface, and the second anti-torsion block is disposed on the second groove sidewall surface and is spaced from the first anti-torsion block.

In the foldable mechanism shown in this application, the first anti-torsion block and the second anti-torsion block are disposed in the mounting groove of the shaft cover, to increase a local thickness of the shaft cover, and enhance overall strength of the shaft cover, thereby avoiding torsion when the shaft cover is assembled with another component, avoiding affecting an appearance of the foldable mechanism, and ensuring appearance aesthetics of the foldable mechanism. In addition, in a process of producing and manufacturing the shaft cover, the first anti-torsion block and the second anti-torsion block may be further used as "connection ribs", to improve manufacturability of the shaft cover.

In an implementation, the foldable mechanism further includes a second main swing arm, the second main swing arm includes a second sliding part, and the second sliding part is slidably and rotatably connected to the support plate.

When the foldable mechanism switches between an unfolded state and a folded state, a rotation direction of the first main swing arm relative to the base is a first direction, a rotation direction of the second main swing arm relative to the base is a second direction, and the first direction is opposite to the second direction.

In the foldable mechanism shown in this application, the support plate is an integrally formed structural member, so that overall strength and rigidity of the support plate can be ensured while light and thin design of the foldable mechanism is implemented, thereby ensuring overall strength of the foldable mechanism, and improving use reliability of the foldable mechanism. In addition, the support plate is fixedly mounted on the base, so that the support plate does not float up or down relative to the base as the foldable mechanism moves. Therefore, the support plate can always provide a display with strong support, and a support area and support force of the foldable mechanism for the display can be increased, thereby improving pressing and touching experience of a user on the display, and further improving anti-fall and anti-impact reliability of the display.

In an implementation, a second mounting notch is disposed on the support plate, and the second mounting notch runs through the support plate in a thickness direction of the support plate.

The second sliding part is mounted in the second mounting notch, and may slide and rotate relative to the support plate in the second mounting notch. A second clearance notch is disposed on the second sliding part, the second clearance notch runs through the second sliding part in a thickness direction of the second sliding part, a second stopping block is further disposed on the second sliding part, the second stopping block is disposed on a bottom surface of the second sliding part and is spaced from the second clearance notch, the second stopping block includes a third stopping surface, and the third stopping surface faces the second clearance notch.

A second stopping arm is disposed on the base, the second stopping arm extends into the second mounting notch, the second stopping arm includes a fourth stopping surface, and the second stopping surface faces a bottom side of the base.

When the second main swing arm is unfolded relative to the base, the second clearance notch is communicated with the second mounting notch, and the second stopping arm further extends into the second clearance notch.

When the second main swing arm is folded relative to the base, the second clearance notch is spaced from the second mounting notch, and the third stopping surface abuts against the fourth stopping surface.

In the foldable mechanism shown in this application, the second stopping arm is designed on the base, and the second stopping block is designed on the second main swing arm, to implement a stopping function of the second main swing arm through fitting between the second stopping arm and the second stopping block, thereby enhancing strength of the second stopping block in a limited space, and ensuring assembly convenience and precision of the base, the support plate, and the second main swing arm.

In an implementation, the second mounting notch includes a second bottom wall surface, and the second bottom wall surface faces an opening of the second mounting notch.

A third slider is further disposed on the support plate, and the third slider is disposed on the second bottom wall surface. A second avoidance chute and a second avoidance notch are disposed on the third slider. An opening of the second avoidance chute is located on a top surface of the third slider, and the second avoidance chute avoids the second stopping block, to prevent the third slider from affecting movement of the second sliding part in the second mounting notch, thereby ensuring smooth movement of the foldable mechanism. The second avoidance notch runs through the third slider in a thickness direction of the third slider, and is communicated with the second avoidance chute and the second mounting notch.

The second stopping arm further extends into the second avoidance notch, the second avoidance notch is further communicated with the second clearance notch when the second main swing arm is unfolded relative to the base, and the second stopping block extends into the second avoidance notch when the second main swing arm is folded relative to the base.

In an implementation, the second mounting notch further includes two second sidewall surfaces, the two second sidewall surfaces are spaced apart and disposed opposite to each other in a length direction of the support plate, and the second bottom wall surface is connected between the two second sidewall surfaces.

The fourth slider is located between the two second sidewall surfaces and is spaced from the two second sidewall surfaces.

Two fourth sliders are further disposed on the support plate, and each of the fourth sliders is disposed on one of the second sidewall surfaces and is spaced from the fourth slider.

The second sliding part is slidably and rotatably connected to the fourth slider and the two fourth sliders.

In the foldable mechanism shown in this application, the fourth slider and the fourth slider are designed on the support plate to implement slidable and rotatable connection between the support plate and the second main swing arm, so that there is no assembly error between shapes and sizes of the fourth slider and the fourth slider of the support plate and a position and a size of the second main swing arm, that is, so that there is no assembly error between a shape and a size of a virtual swing arm chute of the support plate and a position and a size of a virtual swing arm, thereby precisely controlling a movement track of the foldable mechanism, and improving use reliability of the foldable mechanism.

In an implementation, a second reinforcement rib is further disposed on the support plate, and the second reinforcement rib is located between one of the second sidewall surfaces and the third slider and is fixedly connected between the second bottom wall surface and the third slider, to enhance strength at the second mounting notch of the support plate.

In an implementation, a length of the second reinforcement rib gradually increases in a direction from the opening of the second mounting notch to the second bottom wall surface. The second reinforcement rib can enhance strength of the support plate, and prevent the second reinforcement rib from affecting movement of the second main swing arm in the second mounting notch, thereby ensuring smooth movement of the foldable mechanism.

In an implementation, the second reinforcement rib is spaced from the fourth slider in the length direction of the support plate, to prevent the second reinforcement rib from affecting movement of the second sliding part in the second mounting notch, thereby ensuring smooth movement of the foldable mechanism.

In an implementation, a first reinforcement block is further disposed on the support plate, the first reinforcement block is disposed on a bottom surface of the support plate, the first reinforcement block includes two first surfaces, the two first surfaces face away from each other in the length direction of the support plate, and projections of the two first surfaces on a top surface of the support plate are located on two opposite sides that are respectively of the two second sidewall surfaces and that are opposite to each other, and are spaced from the two second sidewall surfaces. The first reinforcement block can enhance strength at the second mounting notch of the support plate, thereby enhancing overall strength and rigidity of the support plate.

In an implementation, there are at least two first reinforcement ribs, and two of the first reinforcement ribs are respectively connected to two opposite sides of the third slider in the length direction of the support plate.

The first reinforcement block includes two reinforcement sub-blocks, the two reinforcement sub-blocks are respectively connected to the two opposite sides of the third slider in the length direction of the support plate, each of the reinforcement sub-blocks includes one of the first surfaces and a second surface, the first surface faces away from the third slider, the second surface and the first surface face away from each other in the length direction of the support plate, and a projection of the second surface on the support plate is located in the third slider. The first reinforcement block can enhance strength at the second mounting notch of the support plate, thereby enhancing overall strength and rigidity of the support plate.

In an implementation, a fourth reinforcement block is disposed on the first bracket, and the fourth reinforcement block is disposed on the top surface of the first bracket. The fourth reinforcement block is designed to increase a thickness of the first bracket, thereby enhancing overall strength and rigidity of the first bracket.

A third avoidance groove is disposed on the fourth reinforcement block, and an opening of the third avoidance groove is located on a top surface of the fourth reinforcement block. The third avoidance groove avoids the second sliding part, to prevent the first bracket from affecting movement of the second sliding part relative to the support plate, thereby ensuring smooth movement of the second sliding part relative to the support plate.

In an implementation, a first pressing groove and a second pressing groove are disposed on the support plate, an opening of the first pressing groove and an opening of the second pressing groove are located on the bottom surface of the support plate, and the first pressing groove and the second pressing groove are spaced from each other in a width direction of the support plate.

The foldable mechanism further includes a first rotating shaft, a second rotating shaft, a first secondary swing arm, and a second secondary swing arm, the first rotating shaft is mounted in the first pressing groove, the second rotating shaft is mounted in the second pressing groove, the first secondary swing arm is sleeved on the first rotating shaft, is rotatably connected to the base, and is spaced from the first main swing arm, and the second secondary swing arm is sleeved on the second rotating shaft, is rotatably connected to the base, and is spaced from the second main swing arm.

In the foldable mechanism shown in this application, the first pressing groove and the second pressing groove are designed on the support plate to mount the first rotating shaft and the second rotating shaft, to precisely control positions of the first rotating shaft and the second rotating shaft, and implement precise control of movement tracks of the first secondary swing arm and the second secondary swing arm, thereby improving movement reliability of the foldable mechanism.

In an implementation, the foldable mechanism includes a first hinge member, a second hinge member, an assembly member, two third rotating shafts, a first elastic member, a second elastic member, and two third elastic members; the first hinge member, the second hinge member, and the assembly member are mounted on the base, are sleeved on the first rotating shaft and the second rotating shaft, and are sequentially spaced apart in a length direction of the base; the two third rotating shafts are mounted between the second hinge member and the assembly member, are located between the first rotating shaft and the second rotating shaft, and are spaced from the first rotating shaft and the second rotating shaft; the first elastic member is sleeved on the first rotating shaft, is located between the second hinge member and the assembly member, and is spaced from a groove wall surface of the first pressing groove; the second elastic member is sleeved on the second rotating shaft, is located between the second hinge member and the assembly member, and is spaced from a groove wall surface of the second pressing groove; and the two third elastic members are respectively sleeved on the two third rotating shafts and are located between the second hinge member and the assembly member.

The first secondary swing arm is spaced from the first elastic member and is hinged with the first hinge member and the second hinge member; and the second secondary swing arm is spaced from the second elastic member and is hinged with the first hinge member and the second hinge member.

When the first secondary swing arm and the second secondary swing arm rotate relative to the base, the first secondary swing arm and the second secondary swing arm jointly abut against the second hinge member, so that the first hinge member moves relative to the assembly member. The first elastic member, the second elastic member, and the two third elastic members may be elastically deformed or elastically recovered, so that the first elastic member, the second elastic member, and the third elastic members can provide damping force. In a process in which the user folds or unfolds a foldable terminal, the user may feel a change of the damping force, and the user may have good tactile experience, thereby improving user experience. In other words, the first secondary swing arm and the second secondary swing arm may be further used as damping swing arms, to omit the damping swing arms, thereby implementing structure simplification of the foldable mechanism.

In an implementation, a third reinforcement block is disposed on the support plate, and the third reinforcement block is disposed on the bottom surface of the support plate and is located between the first pressing groove and the second pressing groove. The third reinforcement block is designed to increase a thickness of the support plate, thereby enhancing overall strength and rigidity of the support plate. Two second avoidance grooves are disposed on the third reinforcement block, openings of the two second avoidance grooves are located on a bottom surface of the third reinforcement block, and the two second avoidance grooves are located between the first pressing groove and the second pressing groove and respectively avoid the two third elastic members, to prevent the support plate from affecting elastic deformation of the third elastic members. It is ensured that when the foldable mechanism switches between a folded state and an unfolded state, the first elastic member, the second elastic member, and the third elastic members can provide the damping force, thereby improving tactile experience of the user.

In an implementation, the foldable mechanism further includes a first door plate and a second door plate, the first door plate is slidably and rotatably connected to the first main swing arm, and the second door plate is slidably and rotatably connected to the second main swing arm.

When the foldable mechanism is in the unfolded state, a top surface of the first door plate, a top surface of the second door plate, and a top surface of the support plate are flush with each other.

When the foldable mechanism shown in this application is used in the foldable terminal, the support plate together with the first door plate and the second door plate may provide a display with strong support, and a support area and support force of the foldable mechanism for the display can be increased, thereby improving pressing and touching experience of the user on the display, and further improving anti-fall and anti-impact reliability of the display.

According to a second aspect, this application provides a foldable terminal, including a first housing, a second housing, and any foldable mechanism described above. The foldable mechanism is connected to the first housing and the second housing.

In the foldable terminal shown in this application, the support plate is an integrally formed structural member, so that overall strength and rigidity of the support plate can be ensured while light and thin design of the foldable mechanism is implemented, thereby ensuring overall strength of the foldable mechanism, and improving use reliability of the foldable mechanism. In addition, the support plate is fixedly mounted on the base, so that the support plate does not float up or down relative to the base as the foldable mechanism moves. Therefore, the support plate can always provide a display with strong support, and a support area and support force of the foldable mechanism for the display can be increased, thereby improving pressing and touching experience of a user on the display, and further improving anti-fall and anti-impact reliability of the display.

### BRIEF DESCRIPTION OF DRAWINGS

To describe technical solutions in embodiments of this application more clearly, the following describes accompanying drawings required in embodiments of this application.
FIG. 1 is a schematic diagram of a structure of a foldable terminal in a folded state according to an embodiment of this application;
FIG. 2 is a schematic diagram of a structure of the foldable terminal shown in FIG. 1 in an unfolded state.
FIG. 3 is a schematic diagram of an exploded structure of the foldable terminal shown in FIG. 2;
FIG. 4 is a schematic diagram of an exploded structure of a foldable apparatus in the foldable terminal shown in FIG. 3;
FIG. 5 is a schematic diagram of a structure of a foldable mechanism in the foldable apparatus shown in FIG. 4;
FIG. 6 is a schematic diagram of an exploded structure of the foldable mechanism shown in FIG. 5;
FIG. 7 is a schematic diagram of a structure of a base in the foldable mechanism shown in FIG. 6;
FIG. 8 is a schematic diagram of a local structure of a shaft cover in the base shown in FIG. 7;
FIG. 9 is a schematic diagram of structures of a first bracket and a second bracket in the base shown in FIG. 7;
FIG. 10 is a schematic diagram of structures of the first bracket and the second bracket shown in FIG. 9 from another perspective;
FIG. 11 is a schematic diagram of a structure of a support plate in the foldable mechanism shown in FIG. 6;
FIG. 12 is a schematic diagram of a structure of the support plate shown in FIG. 11 from another perspective;
FIG. 13 is a schematic diagram of a local structure of the support plate shown in FIG. 12;
FIG. 14 is a schematic diagram of a local structure of the support plate shown in FIG. 11;
FIG. 15 is a schematic diagram of a cross-sectional structure obtained after the support plate shown in FIG. 14 is cut from a position I-I;
FIG. 16 is a schematic diagram of structures of a first damping assembly and a first synchronous assembly in the foldable mechanism shown in FIG. 6;
FIG. 17 is a schematic diagram of a first cross-sectional structure of the foldable mechanism shown in FIG. 5 in a half-unfolded state;
FIG. 18 is a schematic diagram of a second cross-sectional structure of the foldable mechanism shown in FIG. 5 in a half-unfolded state;
FIG. 19 is a schematic diagram of a structure of a first connection assembly in the foldable mechanism shown in FIG. 6;
FIG. 20 is a schematic diagram of a structure of the first connection assembly shown in FIG. 19 from another perspective;
FIG. 21 is a schematic diagram of a third cross-sectional structure of the foldable mechanism shown in FIG. 5 in a half-unfolded state;
FIG. 22 is a schematic diagram of a structure of a door plate assembly in the foldable mechanism shown in FIG. 6;
FIG. 23 is a schematic diagram of a structure of the door plate assembly shown in FIG. 22 from another perspective; and
FIG. 24 is a schematic diagram of a local structure of the door plate assembly shown in FIG. 23.

### DESCRIPTION OF EMBODIMENTS

The following clearly and completely describes technical solutions in embodiments of this application with reference to the accompanying drawings in embodiments of this application.

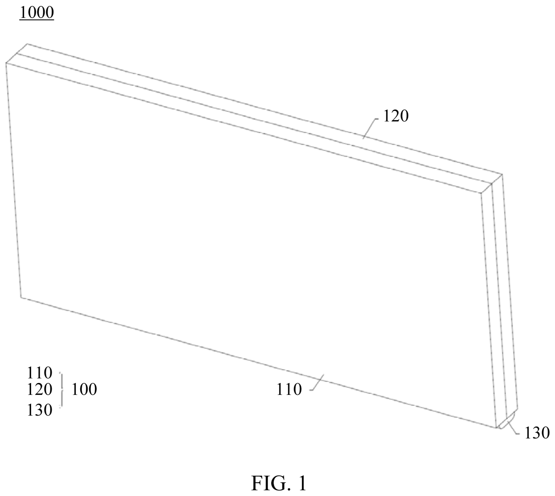

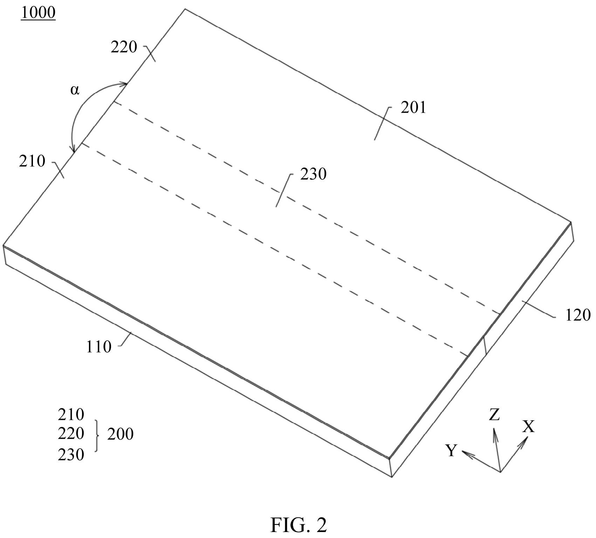

Refer to FIG. 1 and FIG. 2. FIG. 1 is a schematic diagram of a structure of a foldable terminal 1000 in a folded state according to an embodiment of this application, and FIG. 2 is a schematic diagram of a structure of the foldable terminal 1000 shown in FIG. 1 in an unfolded state.

The foldable terminal 1000 may be a foldable electronic product such as a mobile phone, a tablet computer, a personal computer, a multimedia player, an ebook reader, a notebook computer, a vehicle-mounted device, or a wearable device. In this embodiment, the foldable terminal 1000 is a foldable mobile phone. That is, the foldable terminal 1000 is a mobile phone that can switch between the folded state and the unfolded state.

For ease of description, a width direction of the foldable terminal 1000 shown in FIG. 1 is defined as an X-axis direction, a length direction of the foldable terminal 1000 is defined as a Y-axis direction, and a thickness direction of the foldable terminal 1000 is defined as a Z-axis direction. Every two of the X-axis direction, the Y-axis direction, and the Z-axis direction are perpendicular to each other. For example, an extension direction of a rotation axis of the foldable terminal 1000 is parallel to the Y-axis direction. That is, the foldable terminal 1000 can be unfolded or folded relative to each other around the Y-axis direction.

It should be noted that qualifiers such as parallel and perpendicular for a relative position relationship in this embodiment of this application are all for a current process level, and are not absolutely strict definitions in the mathematical sense, a slight deviation is allowed, and approximately parallel and approximately perpendicular are acceptable. For example, "A is parallel to B" means that A is parallel to B or approximately parallel to B, and an included angle between A and B is between 0 degrees and 10 degrees. For example, "A is perpendicular to B" means that A is perpendicular to B or approximately perpendicular to B, and an included angle between A and B is between 80 degrees and 100 degrees.

The foldable terminal 1000 shown in FIG. 1 is in the folded state. In this case, a size of the foldable terminal 1000 in the X-axis direction is small, so that the foldable terminal 1000 is easy to carry. The foldable terminal 1000 shown in FIG. 2 is in the unfolded state. For example, an unfolding angle α of the foldable terminal 1000 shown in FIG. 2 is 180 degrees. In other words, the foldable terminal 1000 shown in FIG. 1 is in a flattened state. In this case, a size of the foldable terminal 1000 in the X-axis direction is large, and the foldable terminal 1000 has a large display area.

It should be noted that the angles exemplified in this embodiment of this application are allowed to have slight deviations. For example, that an unfolding angle α of the foldable terminal 1000 shown in FIG. 2 is 180 degrees means that α may be 180 degrees or about 180 degrees, such as 170 degrees, 175 degrees, 185 degrees, or 190 degrees. Angles exemplified later may be understood in the same way.

It should be understood that the foldable terminal 1000 shown in this embodiment of this application is a one-fold terminal. In some other embodiments, the foldable terminal 1000 may alternatively be a multi-fold terminal (twice or more). In this case, the foldable terminal 1000 may include a plurality of parts, two adjacent parts may be folded relative to and close to each other until the foldable terminal 1000 is in the folded state, or two adjacent parts may be unfolded relative to and far from each other until the foldable terminal 1000 is in the unfolded state.

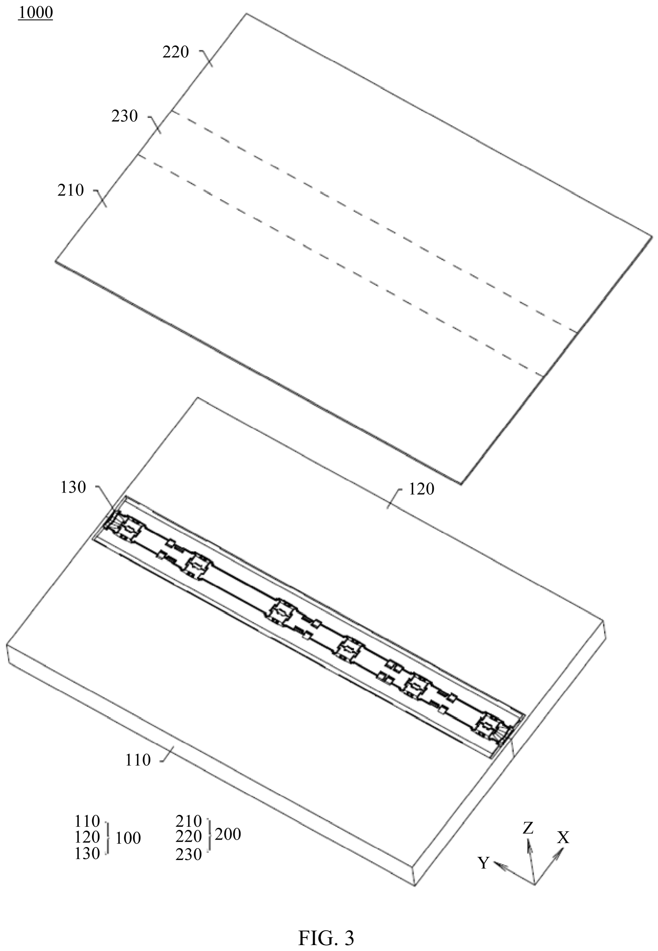

Also refer to FIG. 3. FIG. 3 is a schematic diagram of an exploded structure of the foldable terminal 1000 shown in FIG. 2.

The foldable terminal 1000 includes a foldable apparatus 100 and a display 200, and the display 200 is mounted on the foldable apparatus 100. The display 200 includes a display surface 201 facing away from the foldable apparatus 100, and the display surface 201 is configured to display information such as a text, an image, or a video. In this embodiment, the display 200 includes a first display part 210, a second display part 220, and a foldable part 230, and the foldable part 230 is connected between the first display part 210 and the second display part 220. The foldable part 230 may be bent around the Y-axis direction.

As shown in FIG. 1, when the foldable terminal 1000 is in the folded state, the foldable apparatus 100 and the display 200 are in the folded state, the first display part 210 and the second display part 220 are disposed opposite to each other, and the foldable part 230 is bent. In this case, an exposed area of the display 200 is small, so that a probability that the display 200 is damaged can be greatly reduced, thereby effectively protecting the display 200.

As shown in FIG. 2, when the foldable terminal 1000 is in the flattened state, the foldable apparatus 100 and the display 200 are in the flattened state, the first display part 210 and the second display part 220 are flattened relative to each other, and the foldable part 230 is flattened without bending. In this case, an included angle between the first display part 210 and the second display part 220, an included angle between the first display part 210 and the foldable part 230, and an included angle between the second display part 220 and the foldable part 230 are all α, and the display 200 has a display region with a large area, so that the foldable terminal 1000 implements large-screen display, thereby improving user experience.

It should be understood that the foldable terminal 1000 shown in this embodiment of this application is folded inward, and the display 200 is located on an inner side of the foldable apparatus 100 when the foldable terminal 1000 is in the folded state. In some other embodiments, the foldable terminal 1000 may alternatively be folded outward, and the display 200 is located on an outer side of the foldable apparatus 100 when the foldable terminal 1000 is in the folded state.

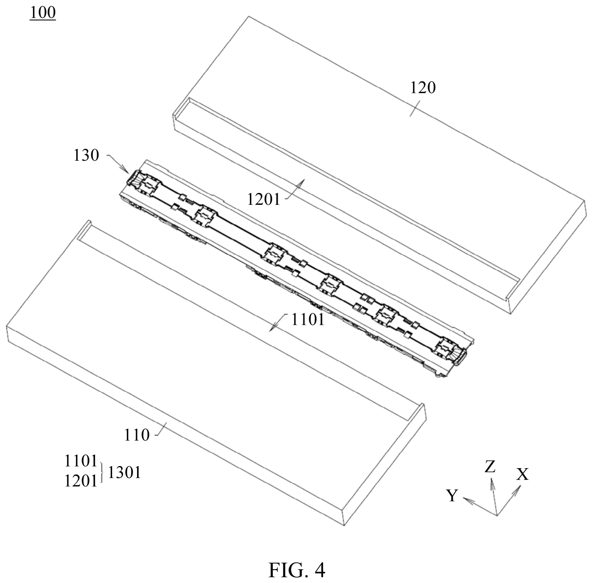

Refer to FIG. 3 and FIG. 4. FIG. 4 is a schematic diagram of an exploded structure of the foldable apparatus 100 in the foldable terminal 1000 shown in FIG. 3.

The foldable apparatus 100 includes a first housing 110, a second housing 120, and a foldable mechanism 130. The foldable mechanism 130 is connected between the first housing 110 and the second housing 120 to implement a rotatable connection between the first housing 110 and the second housing 120. Specifically, the first housing 110 bears the first display part 210, and the second housing 120 bears the second display part 220. In other words, the first display part 210 is mounted on the first housing 110, and the second display part 220 is mounted on the second housing 120. The foldable mechanism 130 is disposed opposite to the foldable part 230.

The first housing 110 and the second housing 120 may rotate relative to each other by using the foldable mechanism 130, so that the foldable apparatus 100 switches between the folded state and the unfolded state. Specifically, the first housing 110 and the second housing 120 may rotate relative to each other to be disposed opposite to each other, to allow the foldable apparatus 100 to be in the folded state, as shown in FIG. 1. In this case, the foldable mechanism 130 is in the folded state. The first housing 110 and the second housing 120 may alternatively rotate relative to each other to be flattened relative to each other, so that the foldable terminal 1000 is in the flattened state, as shown in FIG. 2. In this case, an included angle between the first housing 110 and the second housing 120 is α, and the foldable mechanism 130 is in the flattened state.

A first accommodating groove 1101 is disposed on the first housing 110, and the first accommodating groove 1101 is located on one side that is of the first housing 110 and that faces the second housing 120. An opening of the first accommodating groove 1101 is located on a top surface of the first housing 110. The first accommodating groove 1101 is recessed on the top surface of the first housing 110 in a direction toward a bottom surface, and runs through a side surface that is of the first housing 110 and that faces the second housing 120. The side surface that is of the first housing 110 and that faces the second housing 120 is a left side surface of the first housing 110.

It should be noted that the orientation words such as "top", "bottom", "left", "right", "front", and "rear" used in this embodiment of this application to describe the foldable terminal 1000 are mainly explained based on a display orientation of the foldable terminal 1000 in FIG. 2, with "top" facing a positive direction of a Z axis, "bottom" facing a negative direction of the Z axis, "right" facing a positive direction of an X axis, "left" facing a negative direction of the X axis, "rear" facing a positive direction of a Y axis, and "front" facing a negative direction of the Y axis. This does not limit an orientation of the foldable terminal 1000 in an actual application scenario.

The second housing 120 and the first housing 110 have a same structure and are mirror-symmetrical with respect to the foldable mechanism 130. A second accommodating groove 1201 is disposed on the second housing 120, and the second accommodating groove 1201 is located on one side that is of the second housing 120 and that faces the first housing 110. An opening of the second accommodating groove 1201 is located on a top surface of the second housing 120. The second accommodating groove 1201 is recessed on the top surface of the second housing 120 in a direction toward a bottom surface, and runs through a side surface that is of the second housing 120 and that faces the first housing 110. The side surface that is of the second housing 120 and that faces the first housing 110 is a right side surface of the second housing 120.

When the foldable apparatus 100 is in the flattened state, that is, when the included angle between the first housing 110 and the second housing 120 is α, the first accommodating groove 1101 of the first housing 110 and the second accommodating groove 1201 of the second housing 120 enclose an accommodating space 1301. The foldable mechanism 130 is mounted in the accommodating space 1301, and is connected to the first housing 110 and the second housing 120. A part of the foldable mechanism 130 is mounted in the first accommodating groove 1101 of the first housing 110 and is connected to the first housing 110, and a part of the foldable mechanism 130 is mounted in the second accommodating groove 1201 of the second housing 120 and is connected to the second housing 120.

Currently, the foldable terminal usually uses the foldable mechanism to implement folding, unfolding, and suspension, and uses a support plate of the foldable mechanism to support the foldable part of the display. Design of the support plate affects a crease of the display, a size of the foldable mechanism, user experience, and use reliability of the foldable mechanism. However, because the foldable terminal tends to be designed to be light and thin, strength of the support plate is continuously reduced, resulting in reduction of overall strength of the foldable mechanism, and an impact on use reliability of the foldable mechanism. In addition, an existing foldable mechanism usually uses a floatable support plate to fit with another component. Door plates on left and right sides of the foldable mechanism have limited support force for the display, and a user may have a noticeable sense of collapse when pressing a foldable part, thus degrading user experience. A large quantity of gaps may exist between the door plates on the left and right sides. When the foldable terminal falls off (for example, undergoes a ball drop test) or is impacted (for example, undergoes a pointed object impact) when being used, peeling (peeling) easily occurs on the display, resulting in reduction of use reliability of the foldable terminal.

In addition, a chute that fits with a main swing arm and that is in the foldable mechanism is usually formed through combination of more than two components. There is assembly tolerance between the more than two components, and existence of the assembly tolerance affects movement precision of the main swing arm and the chute, resulting in reduction of movement reliability of the foldable mechanism. In addition, a shaft cover, a bracket, and the support plate in the foldable mechanism are main support components of the foldable mechanism, the chute is disposed on each of the shaft cover, the bracket, and the support plate, or more than two of the shaft cover, the bracket, and the support plate are combined into the chute. Because a lot of machining is required for the components, there are machining errors in the components, and there is an assembly error between the components, resulting in an extremely long dimension chain of the foldable mechanism. In this case, control precision of the foldable mechanism during movement is affected, the foldable mechanism is further caused to have a slack problem, and use reliability of the foldable mechanism is reduced.

The following describes a structure of the foldable mechanism 130 in the foldable terminal 1000 shown in this embodiment of this application.

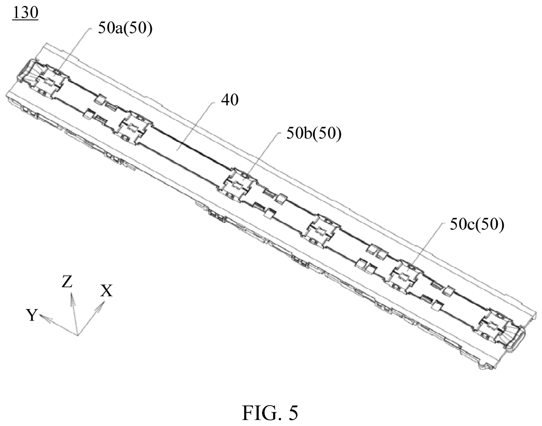

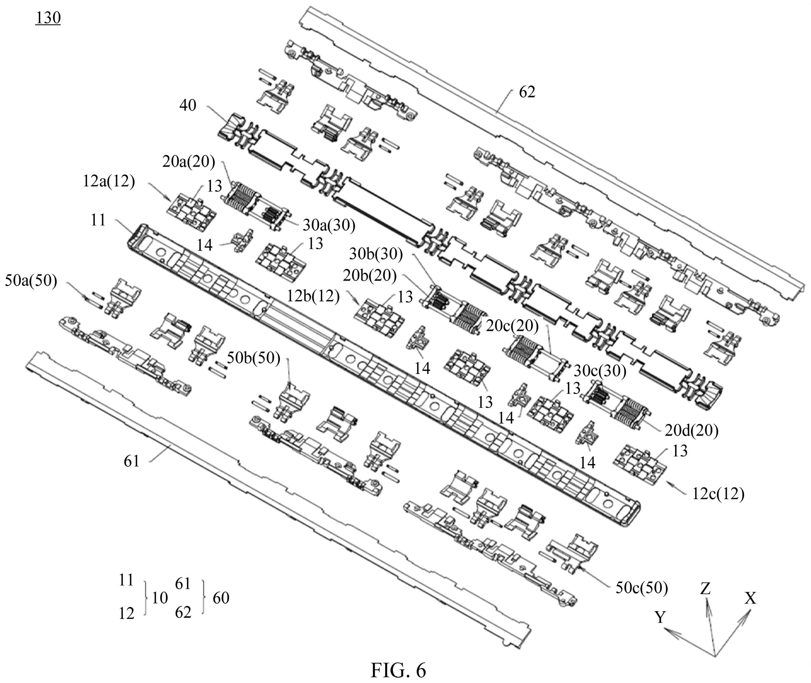

Refer to FIG. 5 and FIG. 6. FIG. 5 is a schematic diagram of a structure of the foldable mechanism 130 in the foldable apparatus 100 shown in FIG. 4, and FIG. 6 is a schematic diagram of an exploded structure of the foldable mechanism 130 shown in FIG. 5.

The foldable mechanism 130 includes a base 10, a damping assembly 20, a synchronous assembly 30, a support plate 40, a connection assembly 50, and a door plate assembly 60. The damping assembly 20, the synchronous assembly 30, the support plate 40, the connection assembly 50, and the door plate assembly 60 are mounted on the base 10. For example, the base 10 extends in the Y-axis direction. The damping assembly 20 and the synchronous assembly 30 are mounted on an inner side of the base 10. The support plate 40 is fixedly mounted on the base 10 and covers the damping assembly 20 and the synchronous assembly 30. For example, the support plate 40 extends in the Y-axis direction. The connection assembly 50 is slidably and rotatably connected to the support plate 40, is rotatably connected to the damping assembly 20, and is engaged with the synchronous assembly 30. The connection assembly 50 may be folded or unfolded relative to the base 10. The door plate assembly 60 is slidably and rotatably connected to the connection assembly 50, and may be driven by the connection assembly 50 to be folded or unfolded relative to the base 10. It should be noted that "cover" mentioned in this embodiment of this application means that "completely cover" and "partially cover" are acceptable. Related description later may be understood in the same way.

When the foldable mechanism 130 is in the folded state, the connection assembly 50 and the door plate assembly 60 are in the folded state. When the foldable mechanism 130 is in the unfolded state, the connection assembly 50 and the door plate assembly 60 are in the unfolded state. In a process in which the foldable mechanism 130 switches from the folded state to the unfolded state, the connection assembly 50 and the door plate assembly 60 switch from the folded state to the unfolded state. In a process in which the foldable mechanism 130 switches from the unfolded state to the folded state, the connection assembly 50 and the door plate assembly 60 switch from the unfolded state to the folded state.

For example, there are four damping assemblies 20, and the four damping assemblies 20 are spaced from each other in the Y-axis direction. The four damping assemblies 20 are respectively a first damping assembly 20a, a second damping assembly 20b, a third damping assembly 20c, and a fourth damping assembly 20d. The first damping assembly 20a, the second damping assembly 20b, the third damping assembly 20c, and the fourth damping assembly 20d are sequentially arranged in the negative direction of the Y axis. The first damping assembly 20a is located at a front part of the base 10, the second damping assembly is located at a middle part of the base 10, and the third damping assembly 20c and the fourth damping assembly 20d are located at a rear part of the base 10. In some other embodiments, there may alternatively be less than three or more than five damping assemblies 20. A quantity of damping assemblies 20 is not specifically limited in this application.

When the foldable mechanism 130 is in the folded state or the flattened state, and the foldable mechanism 130 switches between the folded state and the flattened state, the first damping assembly 20a, the second damping assembly 20b, the third damping assembly 20c, and the fourth damping assembly 20d may provide damping force. In a process in which the user uses the foldable terminal 1000, for example, when the foldable terminal 1000 is in the folded state or the flattened state, and the foldable terminal 1000 switches between the folded state and the flattened state, the user may clearly feel the damping force provided by the first damping assembly 20a, the second damping assembly 20b, the third damping assembly 20c, and the fourth damping assembly 20d, so that the user can have good tactile experience, thereby improving user experience.

It should be noted that the first damping assembly 20a, the second damping assembly 20b, the third damping assembly 20c, and the fourth damping assembly 20d may be of a same structure or similar structures; any two of the first damping assembly 20a, the second damping assembly 20b, the third damping assembly 20c, and the fourth damping assembly 20d may be of symmetrical or partially symmetrical structures; or the first damping assembly 20a, the second damping assembly 20b, the third damping assembly 20c, and the fourth damping assembly 20d may be of completely different structures.

In this embodiment, the first damping assembly 20a, the second damping assembly 20b, the third damping assembly 20c, and the fourth damping assembly 20d may be of a structure of the first damping assembly 20a below. The first damping assembly 20a and the second damping assembly 20b are mirror-symmetrical, and the third damping assembly 20c is mirror-symmetrical with the second damping assembly 20b and the fourth damping assembly 20d. It can be understood that for basic structures and connection relationships of components in the second damping assembly 20b, the third damping assembly 20c, and the fourth damping assembly 20d and connection relationships between the components and components outside the assemblies, refer to related design of the first damping assembly 20a below, and detailed structures or positional arrangement of the components in the second damping assembly 20b, the third damping assembly 20c, and the fourth damping assembly 20d may be different from those of the first damping assembly 20a.

For example, there are three synchronous assemblies 30, and the three synchronous assemblies 30 are spaced from each other in the Y-axis direction. The three synchronous assemblies 30 are respectively a first synchronous assembly 30a, a second synchronous assembly 30b, and a third synchronous assembly 30c. The first synchronous assembly 30a, the second synchronous assembly 30b, and the third synchronous assembly 30c are sequentially arranged in the negative direction of the Y axis. The first synchronous assembly 30a is located at the front part of the base 10, the second synchronous assembly 30b is located at the middle part of the base 10, and the third synchronous assembly 30c is located at the rear part of the base 10. In some other embodiments, there may alternatively be less than two or more than four synchronous assemblies 30. A quantity of synchronous assemblies 30 is not specifically limited in this application.

When the foldable mechanism 130 switches between the folded state and the flattened state, the first synchronous assembly 30a, the second synchronous assembly 30b, and the third synchronous assembly 30c may ensure synchronous rotation of components of the foldable mechanism 130. In the process in which the user uses the foldable terminal 1000, for example, when the foldable terminal 1000 switches between the folded state and the flattened state, the first synchronous assembly 30a, the second synchronous assembly 30b, and the third synchronous assembly 30c may ensure synchronous rotation of the first housing 110 and the second housing 120, thereby improving user experience.

It should be noted that the first synchronous assembly 30a, the second synchronous assembly 30b, and the third synchronous assembly 30c may be of a same structure or similar structures; any two of the first synchronous assembly 30a, the second synchronous assembly 30b, and the third synchronous assembly 30c may be of symmetrical or partially symmetrical structures; or the first synchronous assembly 30a, the second synchronous assembly 30b, and the third synchronous assembly 30c may be of completely different structures.

In this embodiment, the first synchronous assembly 30a, the second synchronous assembly 30b, and the third synchronous assembly 30c may be of a structure of the first synchronous assembly 30a below. It can be understood that for basic structures and connection relationships of components in the second synchronous assembly 30b and the third synchronous assembly 30c and connection relationships between the components and components outside the assemblies, refer to related design of the first synchronous assembly 30a below, and detailed structures or positional arrangement of the components in the second synchronous assembly 30b and the third synchronous assembly 30c may be different from those of the first synchronous assembly 30a.

For example, there are three connection assemblies 50, and the three connection assemblies 50 are spaced from each other in the Y-axis direction. The three connection assemblies 50 are respectively a first connection assembly 50a, a second connection assembly 50b, and a third connection assembly 50c. The first connection assembly 50a, the second connection assembly 50b, and the third connection assembly 50c are sequentially arranged in the negative direction of the Y axis. The first connection assembly 50a is slidably and rotatably connected to a front part of the support plate 40, is rotatably connected to the first damping assembly 20a, and is further engaged with the first synchronous assembly 30a. In a process in which the first connection assembly 50a is folded or unfolded relative to the base 10, the first damping assembly 20a may provide the damping force, and the first synchronous assembly 30a may ensure synchronous rotation of components of the first connection assembly 50a. The second connection assembly 50b is slidably and rotatably connected to a middle part of the support plate 40, is rotatably connected to the second damping assembly 20b, and is further engaged with the second synchronous assembly 30b. In a process in which the second connection assembly 50b is folded or unfolded relative to the base 10, the second damping assembly 20b may provide the damping force, and the second synchronous assembly 30b may ensure synchronous rotation of components of the second connection assembly 50b. The third connection assembly 50c is slidably and rotatably connected to a rear part of the support plate 40, is rotatably connected to the third damping assembly 20c and the fourth damping assembly 20d, and is further engaged with the third synchronous assembly 30c. In a process in which the third connection assembly 50c is folded or unfolded relative to the base 10, the third damping assembly 20c and the fourth damping assembly 20d may provide the damping force, and the third synchronous assembly 30c may ensure synchronous rotation of components of the third connection assembly 50c. In some other embodiments, there may alternatively be less than two or more than four connection assemblies 50. A quantity of connection assemblies 50 is not specifically limited in this application.

It should be noted that the first connection assembly 50a, the second connection assembly 50b, and the third connection assembly 50c may be of a same structure or similar structures; any two of the first connection assembly 50a, the second connection assembly 50b, and the third connection assembly 50c may be of symmetrical or partially symmetrical structures; or the first connection assembly 50a, the second connection assembly 50b, and the third connection assembly 50c may be of completely different structures.

In this embodiment, the first connection assembly 50a, the second connection assembly 50b, and the third connection assembly 50c may be of a structure of the first connection assembly 50a below. The second connection assembly 50b and the first connection assembly 50a are centrally symmetric. It can be understood that for basic structures and connection relationships of components in the second connection assembly 50b and the third connection assembly 50c and connection relationships between the components and components outside the assemblies, refer to related design of the first connection assembly 50a below, and detailed structures or positional arrangement of the components in the second connection assembly 50b and the third connection assembly 50c may be different from those of the first connection assembly 50a.

The door plate assembly 60 is slidably and rotatably connected to the first connection assembly 50a, the second connection assembly 50b, and the third connection assembly 50c. A front part of the door plate assembly 60 is slidably and rotatably connected to the first connection assembly 50a, a middle part of the door plate assembly 60 is slidably and rotatably connected to the second connection assembly 50b, and a rear part of the door plate assembly 60 is slidably and rotatably connected to the third connection assembly 50c.

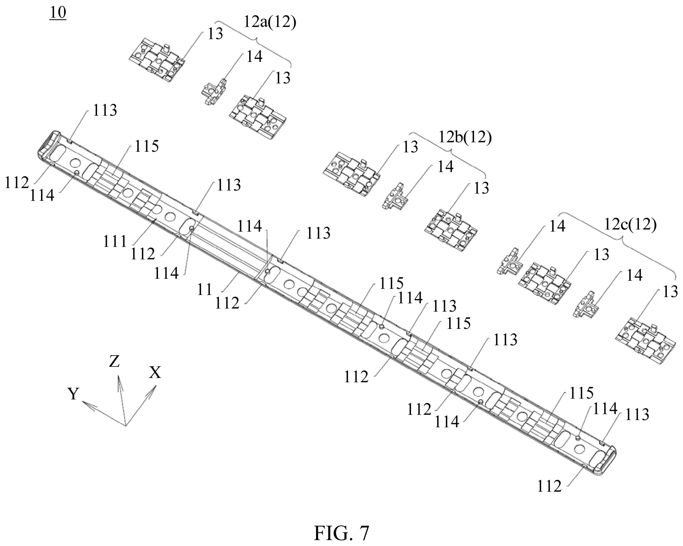

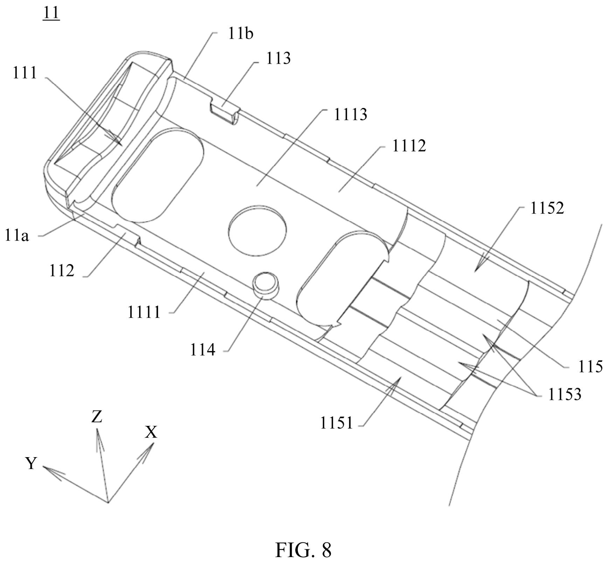

Refer to FIG. 6 to FIG. 8. FIG. 7 is a schematic diagram of a structure of the base 10 in the foldable mechanism 130 shown in FIG. 6, and FIG. 8 is a schematic diagram of a local structure of a shaft cover 11 in the base 10 shown in FIG. 7.

The base 10 includes a shaft cover 11 and a bracket group 12, and the bracket group 12 is mounted on the shaft cover 11. The shaft cover 11 extends in the Y-axis direction. A mounting groove 111 is disposed on the shaft cover 11. An opening of the mounting groove 111 is located on a top surface (not marked in the figure) of the shaft cover 11. The mounting groove 111 is recessed on the top surface of the shaft cover 11 in a direction (the negative direction of the Z axis in the figure) toward a bottom surface (not marked in the figure), and runs through a left side surface (not marked in the figure) and a right side surface (not marked in the figure) of the shaft cover 11. For example, a length direction of the mounting groove 111 is parallel to the Y-axis direction. In some other embodiments, the mounting groove 111 may alternatively not run through the left side surface of the shaft cover 11 and/or the mounting groove 111 may alternatively not run through the right side surface of the shaft cover 11.

It should be noted that "and/or" mentioned in the embodiments of this application means that an "and" case and an "or" case are acceptable. For example, "and/or" includes three cases: "only ... exists", "only ... exists", and "both ... and ... exist". Description of "and/or" later may be understood in the same way.

In addition, the shaft cover 11 includes a first side edge 11a and a second side edge 11b. In a width direction (the X-axis direction in the figure) of the shaft cover 11, the first side edge 11a and the second side edge 11b are respectively located on two opposite sides of the mounting groove 111. The first side edge 11a is located on a left side of the mounting groove 111, and the second side edge 11b is located on a right side of the mounting groove 111. For example, the first side edge 11a and the second side edge 11b are located on bottom sides of the top surface of the shaft cover 11.

The mounting groove 111 includes a first groove sidewall surface 1111, a second groove sidewall surface 1112, and a groove bottom wall surface 1113. The first groove sidewall surface 1111 and the second groove sidewall surface 1112 are spaced apart and disposed opposite to each other in the width direction (the X-axis direction shown in the figure) of the shaft cover 11. The groove bottom wall surface 1113 is connected between the first groove sidewall surface 1111 and the second groove sidewall surface 1112. For example, the first groove sidewall surface 1111 and the second groove sidewall surface 1112 are arc-shaped surfaces, and axes of the first groove sidewall surface 1111 and the second groove sidewall surface 1112 are parallel to the Y-axis direction.

A first anti-torsion block 112, a second anti-torsion block 113, a third positioning column 114, and a fifth reinforcement block 115 are further disposed on the shaft cover 11. The first anti-torsion block 112 is disposed on the first groove sidewall surface 1111, protrudes from the first groove sidewall surface 1111 in a direction toward the second groove sidewall surface 1112, and is spaced from the second groove sidewall surface 1112. The second anti-torsion block 113 is disposed on the second groove sidewall surface 1112, protrudes from the second groove sidewall surface 1112 in a direction toward the first groove sidewall surface 1111, and is spaced from the first groove sidewall surface 1111. Specifically, the first anti-torsion block 112 is disposed on one side that is of the first groove sidewall surface 1111 and that faces away from the groove bottom wall surface 1113, and the second anti-torsion block 113 is disposed on one side that is of the second groove sidewall surface 1112 and that faces away from the groove bottom wall surface 1113. For example, the first anti-torsion block 112 and the second anti-torsion block 113 are mirror-symmetrical.

In this embodiment, there are six first anti-torsion blocks 112 and six second anti-torsion blocks 113. The six first anti-torsion blocks 112 are sequentially spaced apart in the Y-axis direction. Two of the first anti-torsion blocks 112 are located at a front part of the mounting groove 111, two of the first anti-torsion blocks 112 are located at a middle part of the mounting groove 111, and two of the first anti-torsion blocks 112 are located at a rear part of the mounting groove 111. The six second anti-torsion blocks 113 are sequentially spaced apart in the Y-axis direction. Two of the second anti-torsion blocks 113 are located at the front part of the mounting groove 111, two of the second anti-torsion blocks 113 are located at the middle part of the mounting groove 111, and two of the second anti-torsion blocks 113 are located at the rear part of the mounting groove 111.

In some other embodiments, there may alternatively be less than five or more than seven first anti-torsion blocks 112 and/or there may alternatively be less than five or more than seven second anti-torsion blocks 113. Quantities of first anti-torsion blocks 112 and second anti-torsion blocks 113 and arrangement of the first anti-torsion blocks 112 and the second anti-torsion blocks 113 on the mounting groove 111 are not specifically limited in this application.

In this embodiment, the first anti-torsion block 112 and the second anti-torsion block 113 are disposed in the mounting groove 111 of the shaft cover 11, to increase a local thickness of the shaft cover 11, and enhance overall strength of the shaft cover 11, thereby avoiding torsion when the shaft cover 11 is assembled with another component, avoiding affecting an appearance of the foldable mechanism 130, and ensuring appearance aesthetics of the foldable mechanism 130. In addition, in a process of producing and manufacturing the shaft cover 11, the first anti-torsion block 112 and the second anti-torsion block 113 may be further used as "connection ribs", to improve manufacturability of the shaft cover 11.

The third positioning column 114 is disposed on the groove bottom wall surface 1113, protrudes from the groove bottom wall surface 1113 in a direction (the positive direction of the Z axis shown in the figure) facing away from the groove bottom wall surface 1113, and is spaced from the first anti-torsion block 112 and the second anti-torsion block 113. In this embodiment, there are six third positioning columns 114. The six third positioning columns 114 are sequentially spaced apart in the Y-axis direction. Two of the third positioning columns 114 are located at the front part of the mounting groove 111, two of the third positioning columns 114 are located at the middle part of the mounting groove 111, and two of the third positioning columns 114 are located at the rear part of the mounting groove 111. In some other embodiments, there may alternatively be less than five or more than seven third positioning columns 114. A quantity of third positioning columns 114 and arrangement of the third positioning columns 114 on the mounting groove 111 are not specifically limited in this application.

It should be understood that a shape of the third positioning column 114 is not limited to a rounded column shown in the figure, and all or some of the plurality of third positioning columns 114 may be square columns or other special-shaped columns. The shape of the third positioning column 114 is not specifically limited in this application.

The fifth reinforcement block 115 is disposed in the mounting groove 111, and is spaced from the first anti-torsion block 112, the second anti-torsion block 113, and the third positioning column 114. Specifically, the fifth reinforcement block 115 is connected to the first groove sidewall surface 1111, the second groove sidewall surface 1112, and the groove bottom wall surface 1113. A length direction of the fifth reinforcement block 115 is parallel to the Y-axis direction. It can be understood that the fifth reinforcement block 115 may be designed to increase a thickness of the shaft cover 11, thereby enhancing overall strength and rigidity of the shaft cover 11.

A fourth avoidance groove 1151, a fifth avoidance groove 1152, and two sixth avoidance grooves 1153 are disposed on the fifth reinforcement block 115. Openings of the fourth avoidance groove 1151, the fifth avoidance groove 1152, and the two sixth avoidance grooves 1153 are located on a top surface of the fifth reinforcement block 115. The fourth avoidance groove 1151, the fifth avoidance groove 1152, and the two sixth avoidance grooves 1153 are recessed on the top surface of the fifth reinforcement block 115 in a direction (the negative direction of the Z axis shown in the figure) toward a bottom surface. The fourth avoidance groove 1151, the two sixth avoidance grooves 1153, and the fifth avoidance groove 1152 are sequentially spaced apart in the positive direction of the X axis. For example, the groove bottom wall surfaces 1113 of the fourth avoidance groove 1151, the fifth avoidance groove 1152, and the sixth avoidance grooves 1153 are arc-shaped surfaces, and axes of the groove bottom wall surfaces 1113 of the fourth avoidance groove 1151, the fifth avoidance groove 1152, and the sixth avoidance grooves 1153 are parallel to the Y-axis direction.

In this embodiment, there are four fifth reinforcement blocks 115, and the four fifth reinforcement blocks 115 are sequentially spaced apart in the Y-axis direction. One of the fifth reinforcement blocks 115 is located at a front part of a first mounting groove 111, and is located between two third positioning columns 114. One of the fifth reinforcement blocks 115 is located at a middle part of the first mounting groove 111, and is located between two third positioning columns 114. Two of the fifth reinforcement blocks 115 are located at a rear part of the first mounting groove 111, one fifth reinforcement block 115 is located on sides that are of two third positioning columns 114 and that face the second mounting groove 111, and the other fifth reinforcement block 115 is located between the two third positioning columns 114. In some other embodiments, there may alternatively be less than three or more than five fifth reinforcement blocks 115. A quantity of fifth reinforcement blocks 115 and arrangement of the fifth reinforcement blocks 115 in the mounting groove 111 are not specifically limited in this application.

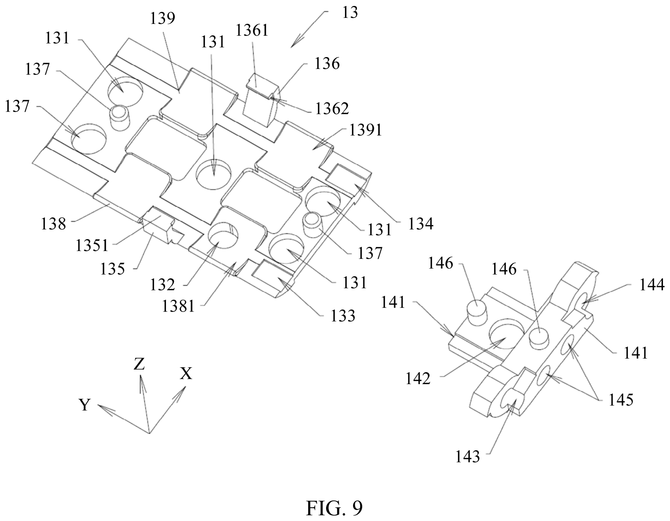

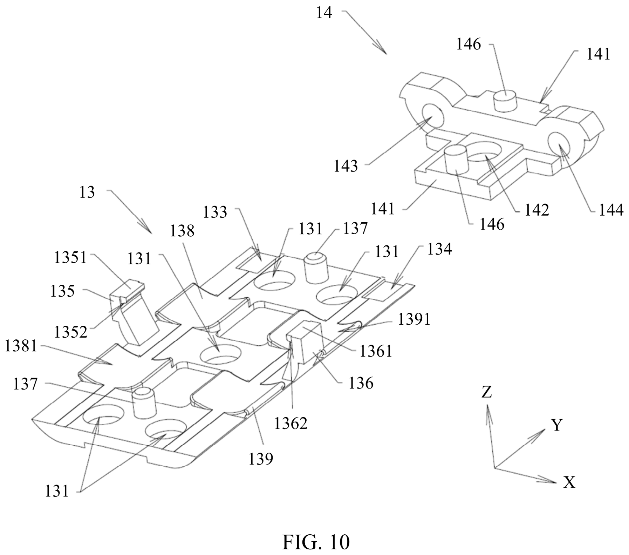

Refer to FIG. 9 and FIG. 10. FIG. 9 is a schematic diagram of structures of a first bracket 13 and a second bracket 14 in the base 10 shown in FIG. 7, and FIG. 10 is a schematic diagram of structures of the first bracket 13 and the second bracket 14 shown in FIG. 9 from another perspective.

The bracket group 12 is mounted in the mounting groove 111. The bracket group 12 includes a first bracket 13 and a second bracket 14. The first bracket 13 and the second bracket 14 are mounted in the mounting groove 111, and are spaced from each other in the Y-axis direction. A first fastening hole 131, a third positioning hole 132, a third pressing groove 133, and a fourth pressing groove 134 are disposed on the first bracket 13. The first fastening hole 131 and the third positioning hole 132 run through the first bracket 13 in a thickness direction (the Z-axis direction shown in the figure) of the first bracket 13, and are spaced from each other. There are a plurality of first fastening holes 131 and one third positioning hole 132, and the plurality of first fastening holes 131 are spaced from each other. For example, the first fastening hole 131 and the third positioning hole 132 are circular holes. In some other embodiments, the first fastening hole 131 may alternatively be a square hole or another special-shaped hole and/or the third positioning hole 132 may alternatively be a square hole or another special-shaped hole.

The third pressing groove 133 and the fourth pressing groove 134 are spaced from the first fastening hole 131 and the third positioning hole 132. Openings of the third pressing groove 133 and the fourth pressing groove 134 are located on a top surface (not marked in the figure) of the first bracket 13. The third pressing groove 133 and the fourth pressing groove 134 are recessed on the top surface of the first bracket 13 in a direction (the negative direction of the Z axis shown in the figure) toward a bottom surface (not marked in the figure), and run through an end surface that is of the first bracket 13 and that faces the second bracket 14. The third pressing groove 133 is located on a left side of the first bracket 13, and the fourth pressing groove 134 is located on a right side of the first bracket 13. For example, the third pressing groove 133 and the fourth pressing groove 134 are mirror-symmetrical.

In addition, a first stopping arm 135, a second stopping arm 136, a first positioning column 137, a second reinforcement block 138, and a fourth reinforcement block 139 are further disposed on the first bracket 13. The first stopping arm 135, the second stopping arm 136, the first positioning column 137, the second reinforcement block 138, and the fourth reinforcement block 139 are disposed on the top surface of the first bracket 13, and protrude from the top surface of the first bracket 13 in a direction (the positive direction of the Z axis shown in the figure) facing away from the bottom surface. In the X-axis direction, the first stopping arm 135 and the second stopping arm 136 are respectively located on two opposite sides of the first bracket 13, and are spaced apart and disposed opposite to each other. The first stopping arm 135 is located on the left side of the first bracket 13. The first stopping arm 135 includes a third stopping block 1351. The third stopping block 1351 is disposed on a surface that is of the first stopping arm 135 and that faces the second stopping arm 136, protrudes, in a direction toward the second stopping arm 136, from the surface that is of the first stopping arm 135 and that faces the second stopping arm 136, and is spaced from the second stopping arm 136. The third stopping block 1351 includes a second stopping surface 1352, and the second stopping surface 1352 faces a bottom side of the base 10. The second stopping surface 1352 faces the top surface of the first bracket 13, and is spaced from the top surface of the first bracket 13.

The second stopping arm 136 is located on the right side of the first bracket 13. For example, the second stopping arm 136 and the first stopping arm 135 are mirror-symmetrical. The second stopping arm 136 includes a fourth stopping block 1361. The fourth stopping block 1361 is disposed on a surface that is of the second stopping arm 136 and that faces the first stopping arm 135, protrudes, in a direction toward the first stopping arm 135, from the surface that is of the second stopping arm 136 and that faces the first stopping arm 135, and is spaced from the first stopping arm 135. The fourth stopping block 1361 includes a fourth stopping surface 1362. The fourth stopping surface 1362 faces the top surface of the first bracket 13, and is spaced from the top surface of the first bracket 13.

In the X-axis direction, the first positioning column 137 is disposed at a middle part of the first bracket 13, and is spaced from the first stopping arm 135 and the second stopping arm 136. In this embodiment, there are two first positioning columns 137, and the two first positioning columns 137 are sequentially spaced apart in the Y-axis direction. In some other embodiments, there may alternatively be one or more than three first positioning columns 137. A quantity of first positioning columns 137 is not specifically limited in this application.

In the X-axis direction, the second reinforcement block 138 and the fourth reinforcement block 139 are respectively located on the two opposite sides of the first bracket 13 and are spaced from each other, and are spaced from the first stopping arm 135, the second stopping arm 136, and the first positioning column 137. Length directions of the second reinforcement block 138 and the fourth reinforcement block 139 are parallel to the Y-axis direction. It can be understood that the second reinforcement block 138 and the fourth reinforcement block 139 are designed to increase a thickness of the first bracket 13, thereby enhancing overall strength and rigidity of the first bracket 13.

The second reinforcement block 138 is located on the left side of the first bracket 13, and is spaced from the first stopping arm 135. A first avoidance groove 1381 is disposed on the second reinforcement block 138, and an opening of the first avoidance groove 1381 is located on a top surface (not marked in the figure) of the second reinforcement block 138. The first avoidance groove 1381 is recessed on the top surface of the second reinforcement block 138 in a direction (the negative direction of the Z axis shown in the figure) toward the top surface of the first bracket 13. For example, the groove bottom wall surface 1113 of the first avoidance groove 1381 is an arc-shaped surface, and an axis of the groove bottom wall surface 1113 of the first avoidance groove 1381 is parallel to the Y-axis direction. The third positioning hole 132 runs through the second reinforcement block 138.

The fourth reinforcement block 139 is located on a right side of the second bracket 14. For example, the fourth reinforcement block 139 and the second reinforcement block 138 are mirror-symmetrical. A third avoidance groove 1391 is disposed on the fourth reinforcement block 139, and an opening of the third avoidance groove 1391 is located on a top surface (not marked in the figure) of the fourth reinforcement block 139. The third avoidance groove 1391 is recessed on the top surface of the fourth reinforcement block 139 in a direction (the negative direction of the Z axis shown in the figure) toward the top surface of the first bracket 13. For example, the groove bottom wall surface 1113 of the third avoidance groove 1391 is an arc-shaped surface, and an axis of the groove bottom wall surface 1113 of the third avoidance groove 1391 is parallel to the Y-axis direction.

The second bracket 14 includes two first end surfaces 141, and the two first end surfaces 141 face away from each other in a length direction (the Y-axis direction shown in the figure) of the second bracket 14. A third fastening hole 142, a first limiting hole 143, a second limiting hole 144, and two third limiting holes 145 are disposed on the second bracket 14. The third fastening hole 142 runs through the second bracket 14 in a thickness direction (the Z-axis direction shown in the figure) of the second bracket 14. There is one third fastening hole 142. It should be understood that a shape of the third fastening hole 142 is not limited to a circular hole shown in the figure, and may alternatively be square or another special shape.

Openings of the first limiting hole 143, the second limiting hole 144, and the two third limiting holes 145 are located on one of the first end surfaces 141 of the second bracket 14. The first limiting hole 143, the second limiting hole 144, and the two third limiting holes 145 are recessed on one first end surface 141 in a direction toward the other first end surface 141. The first limiting hole 143 and the second limiting hole 144 run through the other first end surface 141. The first limiting hole 143, the two third limiting holes 145, and the second limiting hole 144 are sequentially spaced apart in the X-axis direction. The first limiting hole 143 is located on a left side of the second bracket 14, and is disposed corresponding to the third pressing groove 133 of the first bracket 13. The second limiting hole 144 is located on the right side of the second bracket 14, and is disposed corresponding to the fourth pressing groove 134 of the first bracket 13. For example, the first limiting hole 143, the second limiting hole 144, and the third limiting hole 145 are circular holes.

A second positioning column 146 is further disposed on the second bracket 14. The second positioning column 146 is disposed on a top surface (not marked in the figure) of the second bracket 14, and protrudes from the top surface of the second bracket 14 in a direction (the positive direction of the Z axis shown in the figure) facing away from a bottom surface (not marked in the figure). The second positioning column 146 is spaced from the third fastening hole 142. It should be understood that a shape of the second positioning column 146 is not limited to a rounded column shown in the figure, and may alternatively be a square column or another special-shaped column. In this embodiment, there are two second positioning columns 146, and the two second positioning columns 146 are spaced from each other in the length direction of the second bracket 14. In some other embodiments, there may alternatively be one or more than three second positioning columns 146. A quantity and positions of second positioning columns 146 are not specifically limited in this application.

Refer to FIG. 6 and FIG. 7. There are three bracket groups 12, and the three bracket groups 12 are spaced from each other in the Y-axis direction. The three bracket groups 12 are respectively a first bracket group 12a, a second bracket group 12b, and a third bracket group 12c. The first bracket group 12a, the second bracket group 12b, and the third bracket group 12c are sequentially arranged in the Y-axis direction. The first bracket group 12a is mounted at the front part of the mounting groove 111, the second bracket group 12b is mounted at the middle part of the mounting groove 111, and the third bracket group 12c is mounted at the rear part of the mounting groove 111. In some other embodiments, there may alternatively be less than two or more than four bracket groups 12. A quantity and positions of bracket groups 12 are not specifically limited in this application.

It should be noted that the first bracket group 12a, the second bracket group 12b, and the third bracket group 12c may be of a same structure or similar structures; any two of the first bracket group 12a, the second bracket group 12b, and the third bracket group 12c may be of symmetrical or partially symmetrical structures; or the first bracket group 12a, the second bracket group 12b, and the third bracket group 12c may be of completely different structures.

In this embodiment, the first bracket group 12a, the second bracket group 12b, and the third bracket group 12c may be of a structure of the foregoing bracket group 12. The first bracket group 12a and the second bracket group 12b are mirror-symmetrical. There are two first brackets 13 in each of the first bracket group 12a and the second bracket group 12b, and the two first brackets 13 are respectively located on two opposite sides of the second bracket 14 in the Y-axis direction. Different from the first bracket group 12a and the second bracket group 12b, there are two first brackets 13 and two second brackets 14 in the third bracket group 12c, and the two first brackets 13 and the two second brackets 14 are alternately arranged in the Y-axis direction.

It can be understood that for basic structures and connection relationships of components in the second bracket group 12b and the third bracket group 12c and connection relationships between the components and components outside the assemblies, refer to related design of the first bracket group 12a below, and detailed structures or positional arrangement of the components in the second bracket group 12b and the third bracket group 12c may be different from those of the first bracket group 12a.

In the mounting groove 111 of the shaft cover 11, each third positioning column 114 passes through the third positioning hole 132 of each first bracket 13, and the third stopping block 1351 of each first stopping arm 135 and the fourth stopping block 1361 of the second stopping arm 136 extend out of the mounting groove 111. In the base 10 shown in this embodiment, the third positioning column 114 is designed on the shaft cover 11 and the third positioning hole 132 is designed on the first bracket 13, so that positioning between the shaft cover 11 and the bracket group 12 is implemented through fitting between the third positioning column 114 and the third positioning hole 132, thereby improving assembly convenience and assembly accuracy between the shaft cover 11 and the bracket group 12, and implementing modularized design of the shaft cover 11 and the bracket group 12.

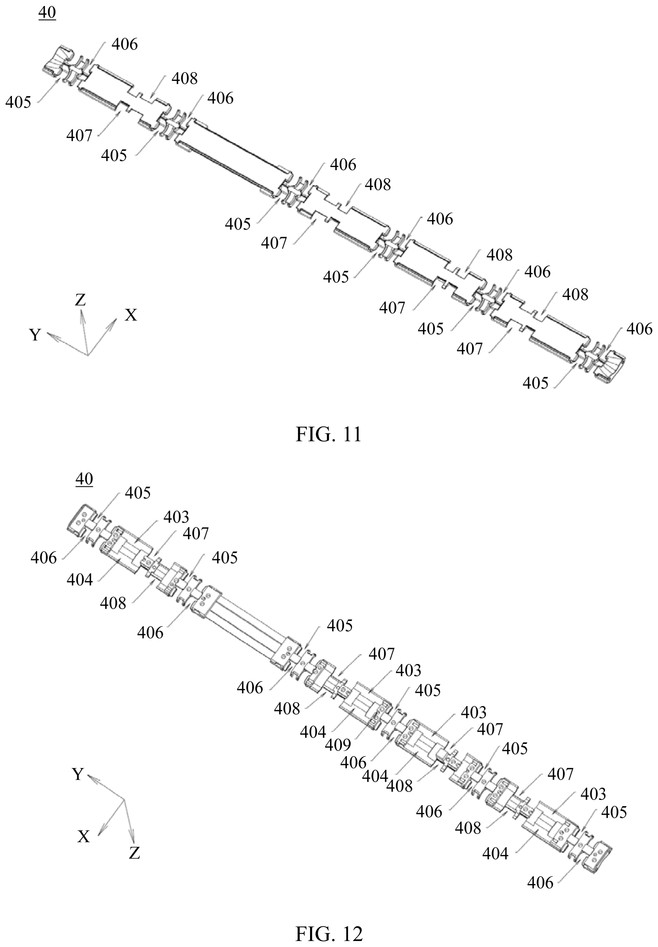

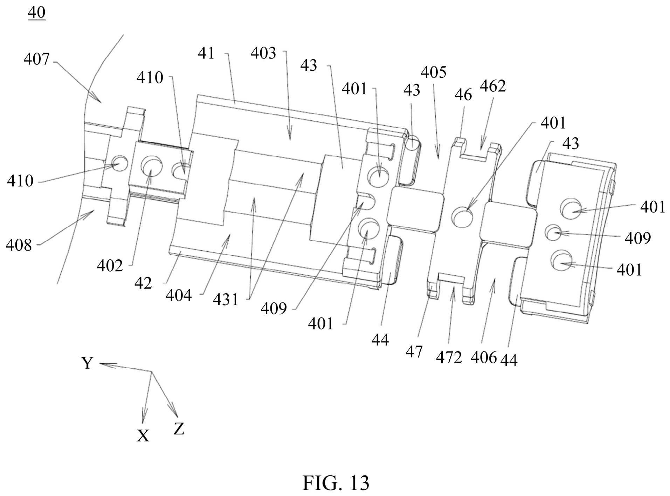

Refer to FIG. 11 to FIG. 13. FIG. 11 is a schematic diagram of a structure of the support plate 40 in the foldable mechanism 130 shown in FIG. 6, FIG. 12 is a schematic diagram of a structure of the support plate 40 shown in FIG. 11 from another perspective, and FIG. 13 is a schematic diagram of a local structure of the support plate 40 shown in FIG. 12.

The support plate 40 is mounted on top sides of the shaft cover 11 and the bracket group 12, and covers the shaft cover 11 and the bracket group 12. In this embodiment, the support plate 40 is integrally formed. That is, the support plate 40 is an integrally formed structural member. A first positioning hole 409, a second positioning hole 410, a second fastening hole 401, a fourth fastening hole 402, a first pressing groove 403, a second pressing groove 404, a first mounting notch 405, a second mounting notch 406, a third mounting notch 407, and a fourth mounting notch 408 are disposed on the support plate 40. Openings of the first positioning hole 409, the second positioning hole 410, the second fastening hole 401, the fourth fastening hole 402, the first pressing groove 403, and the second pressing groove 404 are located on a bottom surface (not marked in the figure) of the support plate 40. The first positioning hole 409, the second positioning hole 410, the second fastening hole 401, the fourth fastening hole 402, the first pressing groove 403, and the second pressing groove 404 are recessed on the bottom surface of the support plate 40 in a direction (the positive direction of the Z axis shown in the figure) toward a top surface (not marked in the figure). There are a plurality of first positioning holes 409 and a plurality of second positioning holes 410, and in the Y-axis direction, the plurality of first positioning holes 409 are sequentially spaced apart and the plurality of second positioning holes 410 are sequentially spaced apart. It should be understood that the first positioning hole 409 and the second positioning hole 410 are not limited to circular holes shown in the figure, and may alternatively be square holes or other special-shaped holes.

In each bracket group 12, each first positioning column 137 of each first bracket 13 passes through one first positioning hole 409, and each second positioning column 146 of each second bracket 14 passes through one second positioning hole 410, to implement quick positioning between the support plate 40 and the base 10. In the foldable mechanism 130 shown in this embodiment, the first positioning column 137 is designed on the first bracket 13, the second positioning column 146 is designed on the second bracket 14, and the first positioning hole 409 and the second positioning hole 410 are designed on the support plate 40, to implement positioning between the support plate 40 and the base 10 through fitting between the first positioning column 137 and the first positioning hole 409 and fitting between the second positioning column 146 and the second positioning hole 410, thereby improving assembly convenience and assembly accuracy between the support plate 40 and the base 10, and implementing modularized design of the support plate 40 and the base 10.

The second fastening hole 401 and the fourth fastening hole 402 run through a top surface of the support plate 40, and are spaced from each other. There are a plurality of second fastening holes 401 and a plurality of fourth fastening holes 402. The plurality of second fastening holes 401 are spaced from each other, and each second fastening hole 401 is communicated with one first fastening hole 131 of the first bracket 13. The plurality of fourth fastening holes 402 are spaced from each other in the Y-axis direction. Each fourth fastening hole 402 is communicated with the third fastening hole 142 of one second bracket 14. It should be understood that the second fastening hole 401 and the fourth fastening hole 402 are not limited to circular holes shown in the figure, and may alternatively be square holes or other special-shaped holes.

In addition, the foldable mechanism 130 may further include a first fastener (not shown in the figure) and a second fastener (not shown in the figure). There are a plurality of first fasteners and a plurality of second fasteners. Each first fastener may pass through one first fastening hole 131 and one second fastening hole 401, and is fixedly connected to the first bracket 13 and the support plate 40, to implement assembly between the first bracket 13 and the support plate 40, thereby implementing assembly between the base 10 and the support plate 40. Each second fastener may pass through one third fastening hole 142 and one fourth fastening hole 402, and is fixedly connected to the second bracket 14 and the support plate 40, to implement assembly between the second bracket 14 and the support plate 40, thereby implementing assembly between the base 10 and the support plate 40. For example, the first fastener and the second fastener may be fasteners having a fastening function, such as bolts or screws.

The first pressing groove 403 and the second pressing groove 404 are respectively located on two opposite sides of the support plate 40 in the X-axis direction. Specifically, the first pressing groove 403 is located on a left side of the support plate 40, and is disposed opposite to the fourth avoidance groove 1151 of the shaft cover 11 and the third pressing groove 133 of the first bracket 13. The second pressing groove 404 is located on a right side of the support plate 40, and is disposed opposite to the fifth avoidance groove 1152 of the shaft cover 11 and the fourth pressing groove 134 of the first bracket 13. For example, the first pressing groove 403 and the second pressing groove 404 are mirror-symmetrical. The first pressing groove 403 and the second pressing groove 404 are arc-shaped grooves, and axes of the first pressing groove 403 and the second pressing groove 404 are parallel to the Y-axis direction.

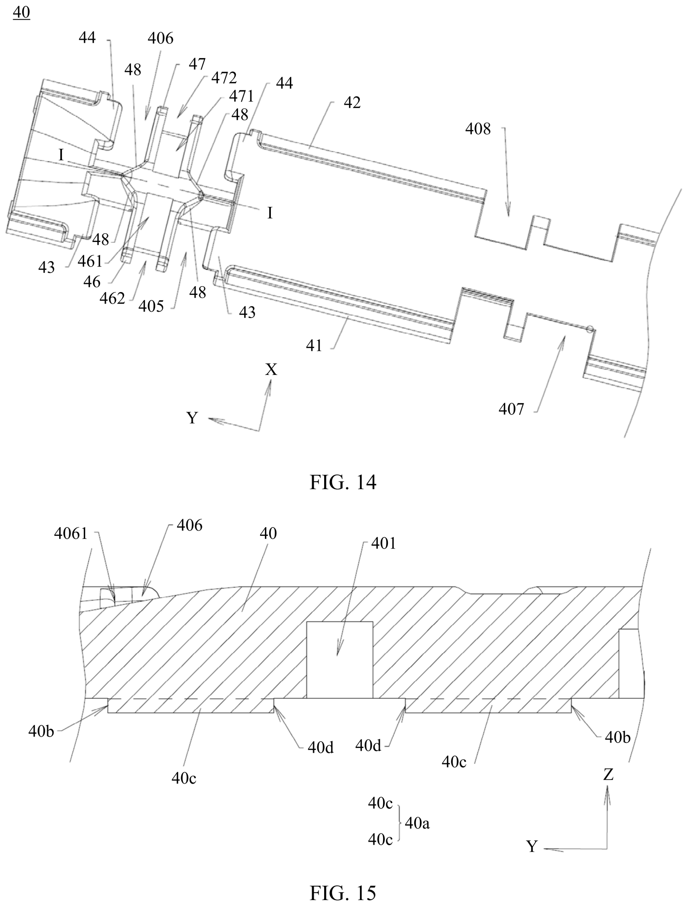

Refer to FIG. 14. FIG. 14 is a schematic diagram of a local structure of the support plate 40 shown in FIG. 11.

The first mounting notch 405, the second mounting notch 406, the third mounting notch 407, and the fourth mounting notch 408 run through the support plate 40 in a thickness direction of the support plate 40. The first mounting notch 405 and the second mounting notch 406 are respectively located on the two opposite sides of the support plate 40 in the X-axis direction. The first mounting notch 405 is located on the left side of the support plate 40. An opening of the first mounting notch 405 is located on a left side surface of the support plate 40. The first mounting notch 405 is recessed on the left side surface of the support plate 40 in a direction (the positive direction of the X axis shown in the figure) toward a right side surface, and runs through the top surface and the bottom surface of the support plate 40, so that the first stopping arm 135 and the first avoidance groove 1381 of the first bracket 13 are exposed. The first mounting notch 405 includes two first sidewall surfaces (not marked in the figure) and a first bottom wall surface (not marked in the figure). The two first sidewall surfaces are spaced apart and disposed opposite to each other in a length direction (the Y-axis direction shown in the figure) of the support plate 40. The first bottom wall surface is connected between the two first sidewall surfaces, and faces the opening of the first mounting notch 405.

The second mounting notch 406 is located on a right side of the support plate 40. An opening of the second mounting notch 406 is located on the right side surface of the support plate 40. The second mounting notch 406 is recessed on the right side surface of the support plate 40 in a direction (the negative direction of the X axis shown in the figure) toward the left side surface, and runs through the top surface and the bottom surface of the support plate 40, so that the second stopping arm 136 and the third avoidance groove 1391 of the first bracket 13 are exposed. For example, the first mounting notch 405 and the second mounting notch 406 are mirror-symmetrical. The second mounting notch 406 includes two second sidewall surfaces (not marked in the figure) and a second bottom wall surface (not marked in the figure). The two second sidewall surfaces are spaced apart and disposed opposite to each other in the Y-axis direction. The second bottom wall surface is connected between the two second sidewall surfaces, and faces the opening of the second mounting notch 406.

In this embodiment, there are six first mounting notches 405 and six second mounting notches 406. In the Y-axis direction, the six first mounting notches 405 are sequentially spaced apart, and the six second mounting notches 406 are sequentially spaced apart. Two of the first mounting notches 405 are located at the front part of the support plate 40, two of the first mounting notches 405 are located at the middle part of the support plate 40, and two of the first mounting notches 405 are located at the rear part of the support plate 40. Two of the second mounting notches 406 are located at the front part of the support plate 40, two of the second mounting notches 406 are located at the middle part of the support plate 40, and two of the second mounting notches 406 are located at the rear part of the support plate 40.

In some other embodiments, a quantity of first mounting notches 405 may alternatively not be six, for example, may be less than five or more than seven; and/or a quantity of second mounting notches 406 may alternatively not be six, for example, may be less than five or more than seven. The quantities of first mounting notches 405 and second mounting notches 406 are not specifically limited in this application.

In the Y-axis direction, the third mounting notch 407 is located on one side of the first mounting notch 405 and is spaced from the first mounting notch 405, and the fourth mounting notch 408 is located on one side of the second mounting notch 406 and is spaced from the second mounting notch 406. The third mounting notch 407 and the fourth mounting notch 408 are respectively located on the two opposite sides of the support plate 40 in the X-axis direction. The third mounting notch 407 is located on the left side of the support plate 40, runs through the left side surface of the support plate 40, and is spaced from the first mounting notch 405 in the Y-axis direction. The fourth mounting notch 408 is located on the right side of the support plate 40, runs through the right side surface of the support plate 40, and is spaced from the second mounting notch 406 in the Y-axis direction. For example, the third mounting notch 407 and the fourth mounting notch 408 are mirror-symmetrical.

In this embodiment, there are four third mounting notches 407 and four fourth mounting notches 408. In the Y-axis direction, the four third mounting notches 407 are sequentially spaced apart, and the four fourth mounting notches 408 are sequentially spaced apart. One of the third mounting notches 407 is located at the front part of the support plate 40, and is located between two first mounting notches 405 in the Y-axis direction; one of the third mounting notches 407 is located at the middle part of the support plate 40, and is located between two first mounting notches 405 in the Y-axis direction; and two of the third mounting notches 407 are located at the rear part of the support plate 40, and are alternately arranged with two first mounting notches 405 in the Y-axis direction. One of the fourth mounting notches 408 is located at the front part of the support plate 40, and is located between two second mounting notches 406 in the Y-axis direction; one of the fourth mounting notches 408 is located at the middle part of the support plate 40, and is located between two second mounting notches 406 in the Y-axis direction; and two of the fourth mounting notches 408 are located at the rear part of the support plate 40, and are alternately arranged with two second mounting notches 406 in the Y-axis direction.

In some other embodiments, a quantity of third mounting notches 407 may alternatively not be four, for example, may be less than three or more than five; and/or a quantity of fourth mounting notches 408 may alternatively not be four, for example, may be less than three or more than five. The quantities of third mounting notches 407 and fourth mounting notches 408 are not specifically limited in this application.

A first side rib 41, a second side rib 42, a third reinforcement block 43, a second slider 44, a fourth slider 45, a first slider 46, a third slider 47, a first reinforcement rib 48, a second reinforcement rib 49, and a first reinforcement block 40a are further disposed on the support plate 40. The first side rib 41 and the second side rib 42 are respectively located on the two opposite sides of the support plate 40 in a width direction (the X-axis direction shown in the figure) of the support plate 40. The first side rib 41 is disposed on the left side surface (not marked in the figure) of the support plate 40, and protrudes from the left side surface (not marked in the figure) of the support plate 40 in a direction (the negative direction of the X axis shown in the figure) facing away from the right side surface (not marked in the figure). The second side rib 42 is disposed on the right side surface (not marked in the figure) of the support plate 40, and protrudes from the right side surface of the support plate 40 in a direction (the positive direction of the X axis shown in the figure) facing away from the left side surface. Length directions of the first side rib 41 and the second side rib 42 are parallel to the Y-axis direction. For example, the first side rib 41 and the second side rib 42 are mirror-symmetrical.

The first side rib 41 is lap-jointed with the first side edge 11a (as shown in FIG. 8) of the shaft cover 11, and the second side rib 42 is lap-jointed with the second side edge 11b (as shown in FIG. 8) of the shaft cover 11, to enhance overall strength and rigidity of the support plate 40, and further improve assembly stability between the support plate 40 and the base 10, thereby enhancing overall strength and rigidity of the foldable mechanism 130, and improving use reliability of the foldable mechanism 130.

The third reinforcement block 43 is disposed on the bottom surface of the support plate 40, and protrudes from the bottom surface of the support in a direction (the negative direction of the Z axis shown in the figure) facing away from the top surface. Specifically, the third reinforcement block 43 is located between the first side rib 41 and the second side rib 42, and is spaced from the first side rib 41 and the second side rib 42. A length direction of the third reinforcement block 43 is parallel to the Y-axis direction. It can be understood that the third reinforcement block 43 is designed to increase a thickness of the support plate 40, thereby enhancing overall strength and rigidity of the support plate 40.

Two second avoidance grooves 431 are disposed on the third reinforcement block 43, and openings of the two second avoidance grooves 431 are located on a bottom surface (not marked in the figure) of the fifth reinforcement block 115. The two second avoidance grooves 431 are recessed on the bottom surface of the third reinforcement block 43 in a direction (the positive direction of the Z axis shown in the figure) toward the top surface of the support plate 40, and are spaced from each other. For example, the second avoidance grooves 431 are arc-shaped grooves, and axes of the second avoidance grooves 431 are parallel to the Y-axis direction. In the X-axis direction, the two second avoidance grooves 431 are located between the first pressing groove 403 and the second pressing groove 404, and are spaced from the first pressing groove 403 and the second pressing groove 404. The two second avoidance grooves 431 are respectively disposed opposite to two sixth avoidance grooves 1153 of the shaft cover 11.

The second slider 44 is disposed on one first sidewall surface of the first mounting notch 405, extends in a direction (the Y-axis direction shown in the figure) from one first sidewall surface to the other first sidewall surface, and is spaced from the other first sidewall surface and the first bottom wall surface. A bottom surface (not marked in the figure) of the second slider 44 is located between the bottom surface of the support plate 40 and the top surface of the support plate 40. The bottom surface of the second slider 44 is an arc-shaped surface. For example, an axis of the bottom surface of the second slider 44 is parallel to the Y-axis direction.

In this embodiment, there are twelve second sliders 44, and each second slider 44 is disposed on one first sidewall surface of one first mounting notch 405. Two of the second sliders 44 are spaced apart and disposed opposite to each other in the Y-axis direction in each first mounting notch 405. The bottom surfaces of the two second sliders 44 are coaxial. In some other embodiments, a quantity of second sliders 44 may alternatively not be twelve, and the quantity of second sliders 44 may be less than eleven or more than thirteen. This is not specifically limited in this application.

The fourth slider 45 is disposed on one second sidewall surface of the second mounting notch 406, extends in a direction from one second sidewall surface to the other second sidewall surface, and is spaced from the other second sidewall surface and the second bottom wall surface. A bottom surface of the fourth slider 45 is located between the bottom surface of the support plate 40 and the top surface of the support plate 40. The bottom surface of the fourth slider 45 is an arc-shaped surface. For example, an axis of the bottom surface of the fourth slider 45 is parallel to the Y-axis direction.

In this embodiment, there are twelve fourth sliders 45, and each fourth slider 45 is disposed on one second sidewall surface of one second mounting notch 406. Two of the fourth sliders 45 are spaced apart and disposed opposite to each other in the Y-axis direction in each second mounting notch 406. The bottom surfaces of the two fourth sliders 45 are coaxial. In some other embodiments, a quantity of fourth sliders 45 may alternatively not be twelve, and the quantity of fourth sliders 45 may be less than eleven or more than thirteen. This is not specifically limited in this application.

The first slider 46 is disposed on the first bottom wall surface of the first mounting notch 405, extends from the first bottom wall surface in a direction (the negative direction of the X axis shown in the figure) toward the left side surface of the support plate 40, and is spaced from the second slider 44. The first slider 46 is located between two second sliders 44 in the Y-axis direction. The first slider 46 includes two first side surfaces (not marked in the figure). In the Y-axis direction, the two first side surfaces face away from each other and are connected to the first bottom wall surface. In a thickness direction (the Z-axis direction shown in the figure) of the first slider 46, a top surface of the first slider 46 and a bottom surface of the first slider 46 face away from each other, and are connected between the two first side surfaces. The top surface of the first slider 46 is an arc-shaped surface. For example, the top surface of the first slider 46 and the bottom surfaces of the two second sliders 44 are coaxial.

A first avoidance chute 461 and a first avoidance notch 462 are disposed on the first slider 46. An opening of the first avoidance chute 461 is located on the top surface of the first slider 46. The first avoidance chute 461 is recessed on the top surface of the first slider 46 in a direction (the negative direction of the Z axis shown in the figure) toward the bottom surface. The first avoidance chute 461 is an arc-shaped chute. For example, an axis of the first avoidance chute 461 is parallel to the Y-axis direction, and is coaxial with the top surface of the first slider 46.

The first avoidance notch 462 runs through the first slider 46 in the thickness direction (the Z-axis direction shown in the figure) of the first slider 46, and runs through a left side surface of the first slider 46. The first avoidance notch 462 is communicated with the first avoidance chute 461 and the first mounting notch 405. Specifically, an opening of the first avoidance notch 462 is located on the bottom surface of the first slider 46. The first avoidance notch 462 is recessed on the bottom surface of the first slider 46 in a direction toward the first avoidance chute 461, and runs through the groove bottom wall surface 1113 of the first avoidance chute 461 and the left side surface of the first slider 46. The first avoidance notch 462 avoids the first stopping arm 135 of the first bracket 13. In this case, the first stopping arm 135 extends into the first avoidance notch 462.

The third slider 47 is disposed on the second bottom wall surface of the second mounting notch 406, extends from the second bottom wall surface in a direction (the positive direction of the X axis shown in the figure) toward the right side surface of the support plate 40, and is spaced from the fourth slider 45. Specifically, the third slider 47 is located between two fourth sliders 45 in the Y-axis direction. In the X-axis direction, the third slider 47 and the first slider 46 are respectively located on two opposite sides of one second fastening hole 401, and are spaced from the second fastening hole 401. For example, the third slider 47 and the first slider 46 are mirror-symmetrical.

The third slider 47 includes two second side surfaces (not marked in the figure). In the Y-axis direction, the two second side surfaces face away from each other and are connected to the second bottom wall surface. In a thickness direction (the Z-axis direction shown in the figure) of the third slider 47, a top surface of the third slider 47 and a bottom surface of the third slider 47 face away from each other, and are connected between the two second side surfaces. The top surface of the third slider 47 is an arc-shaped surface. For example, the top surface of the third slider 47 and the bottom surfaces of the two fourth sliders 45 are coaxial.

A second avoidance chute 471 and a second avoidance notch 472 are disposed on the third slider 47. An opening of the second avoidance chute 471 is located on the top surface of the third slider 47. The second avoidance chute 471 is recessed on the top surface of the third slider 47 in a direction (the negative direction of the Z axis shown in the figure) toward the bottom surface of the third slider 47. The second avoidance chute 471 is an arc-shaped groove. For example, an axis of the second avoidance chute 471 is parallel to the Y-axis direction, and is coaxial with the top surface of the third slider 47.

The second avoidance notch 472 runs through the third slider 47 in the thickness direction (the Z-axis direction shown in the figure) of the third slider 47, and runs through a right side surface of the third slider 47. Specifically, an opening of the second avoidance notch 472 is located on the bottom surface of the third slider 47. The second avoidance notch 472 is recessed on the bottom surface of the third slider 47 in a direction toward the second avoidance chute 471, and runs through the groove bottom wall surface 1113 of the second avoidance chute 471 and the right side surface of the third slider 47. The second avoidance notch 472 avoids the second stopping arm 136 of the first bracket 13. In this case, the second stopping arm 136 extends into the second avoidance notch 472.

In this embodiment, there are four first sliders 46 and four third sliders 47. Each first slider 46 is disposed on the first bottom wall surface of one first mounting notch 405. Each third slider 47 is disposed on the second bottom wall surface of one second mounting notch 406. In some other embodiments, a quantity of first sliders 46 may alternatively not be four, for example, may be more than three or more than five; and/or a quantity of third sliders 47 may alternatively not be four, for example, may be more than three or more than five. The quantities of first sliders 46 and third sliders 47 are not specifically limited in this application.

The first reinforcement rib 48 is located between one first sidewall surface of the first mounting notch 405 and the first slider 46, and is fixedly connected between the first bottom wall surface of the first mounting notch 405 and the first slider 46. The first reinforcement rib 48 is fixedly connected between the first bottom wall surface and one first side surface of the first slider 46, and is spaced from the first sidewall surface of the first mounting notch 405 in the Y-axis direction. A width of the first reinforcement rib 48 gradually increases in a direction (the positive direction of the X axis shown in the figure) from the opening of the first mounting notch 405 to the first bottom wall surface. A length of the first reinforcement rib 48 gradually increases in a direction (the Y-axis direction shown in the figure) from the first reinforcement rib 48 to the first slider 46. The first reinforcement rib 48 includes a first connection surface (not marked in the figure), and the first connection surface is connected between the first bottom wall surface and the first side surface.

In this embodiment, there are twelve first reinforcement ribs 48, and each first reinforcement rib 48 is connected between one first sidewall surface of one first mounting notch 405 and the first bottom wall surface of the first mounting notch 405. Two first reinforcement ribs 48 are respectively disposed on two opposite sides of the first slider 46 in the Y-axis direction in each first mounting notch 405. For example, the first connection surface is an inclined surface. In this case, every two first reinforcement ribs 48 form a structure similar to a "narrow neck" structure in one first mounting notch 405, to enhance strength of the support plate 40, and prevent the first reinforcement ribs 48 from affecting movement of the first main swing arm of the connection assembly 50 in the first mounting notch 405. In some other embodiments, a quantity of first reinforcement ribs 48 may alternatively not be twelve, and the quantity of first reinforcement ribs 48 may be less than eleven or more than thirteen. This is not specifically limited in this application.

The second reinforcement rib 49 is connected between the second bottom wall surface of the second mounting notch 406 and one second side surface of the third slider 47, and is spaced from the second sidewall surface of the second mounting notch 406 in the Y-axis direction. A width of the second reinforcement rib 49 gradually increases in a direction (the negative direction of the X axis shown in the figure) from the right side surface of the third slider 47 to the second bottom wall surface. A length of the second reinforcement rib 49 gradually decreases in a direction (the Y-axis direction shown in the figure) from the third slider 47 to the second sidewall surface. The second reinforcement rib 49 includes a second connection surface, and the second connection surface is connected between the second bottom wall surface and the second side surface. For example, the second reinforcement rib 49 and the first reinforcement rib 48 are mirror-symmetrical.

In this embodiment, there are twelve second reinforcement ribs 49, and each second reinforcement rib 49 is connected between one second sidewall surface of one second mounting notch 406 and the second bottom wall surface of the second mounting notch 406. Two second reinforcement ribs 49 are respectively disposed on two opposite sides of the third slider 47 in the Y-axis direction in each second mounting notch 406. For example, the second connection surface is an inclined surface. In this case, every two second reinforcement ribs 49 form a structure similar to a "narrow neck" structure in one second mounting notch 406, to enhance strength of the support plate 40, and prevent the second reinforcement ribs 49 from affecting movement of the second main swing arm in the second mounting notch 406. In some other embodiments, a quantity of second reinforcement ribs 49 may alternatively not be twelve, and the quantity of second reinforcement ribs 49 may be less than eleven or more than thirteen. This is not specifically limited in this application.

Refer to FIG. 15. FIG. 15 is a schematic diagram of a cross-sectional structure obtained after the support plate 40 shown in FIG. 14 is cut from a position I-I. "Cut from a position I-I" means "cut from a plane in which the position I-I is located". Similar description later may be understood in the same way.

The first reinforcement blocks 40a are disposed on the bottom surface of the support plate 40, and extend from the bottom surface of the support plate 40 in a direction (the negative direction of the Z axis shown in the figure) facing away from the top surface. The first reinforcement block 40a extends in the Y-axis direction. The first reinforcement block 40a includes two first surfaces 40b, and the two first surfaces 40b face away from each other in the length direction of the support plate 40. A part of a projection of the first reinforcement block 40a on the top surface of the support plate 40 is located in the first mounting notch 405, and the other part of the projection of the first reinforcement block 40a on the top surface of the support plate 40 is located in the second mounting notch 406. Projections of the two first surfaces 40b on the top surface of the support plate 40 are located on two opposite sides that are respectively of the two first sidewall surfaces of the first mounting notch 405 and that are opposite to each other, and are spaced from the two first sidewall surfaces. The projections of the two first surfaces 40b on the top surface of the support plate 40 are also located on two opposite sides that are respectively of the two second sidewall surfaces of the second mounting notch 406 and that are opposite to each other, and are spaced from the two second sidewall surfaces.

For example, the first reinforcement block 40a includes two reinforcement sub-blocks 40c, and the two reinforcement sub-blocks 40c are spaced apart in the length direction of the support plate 40. Specifically, in the length direction of the support plate 40, the two reinforcement sub-blocks 40c are respectively connected to the two opposite sides of the first slider 46, are respectively connected to the two opposite sides of the third slider 47, are respectively located on the two opposite sides of the second fastening hole 401, and are further spaced from the second fastening hole 401. Each reinforcement sub-block 40c includes a first surface 40b and a second surface 40d. The first surface 40b is a surface that is of the reinforcement sub-block 40c and that faces away from the first slider 46 and the third slider 47. The second surface 40d and the first surface 40b face away from each other in the length direction of the support plate 40. A projection of the second surface 40d on the top surface of the support plate 40 is located in the first slider 46.

In this case, the first reinforcement block 40a and the support plate 40 may form a stepped structure around the second fastening hole 401, and the first reinforcement block 40a may enhance strength at the first mounting notch 405 and the second mounting notch 406 of the support plate 40, thereby enhancing overall strength and rigidity of the support plate 40. In this embodiment, there are six first reinforcement blocks 40a, and the six first reinforcement blocks 40a are sequentially spaced apart in the Y-axis direction. In some other embodiments, there may alternatively be more than five or more than seven first reinforcement blocks 40a. A quantity of first reinforcement blocks 40a is not specifically limited in this application.

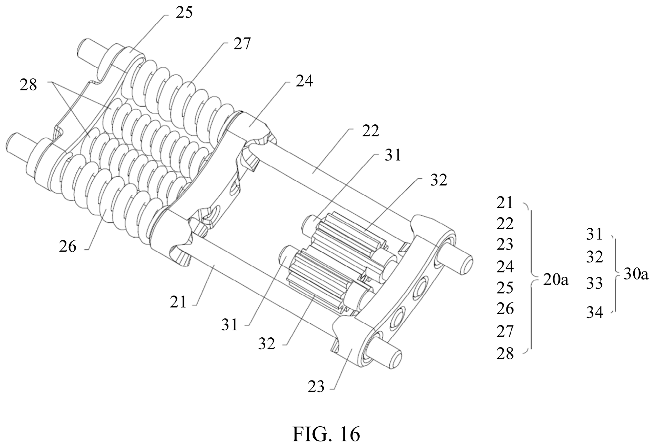

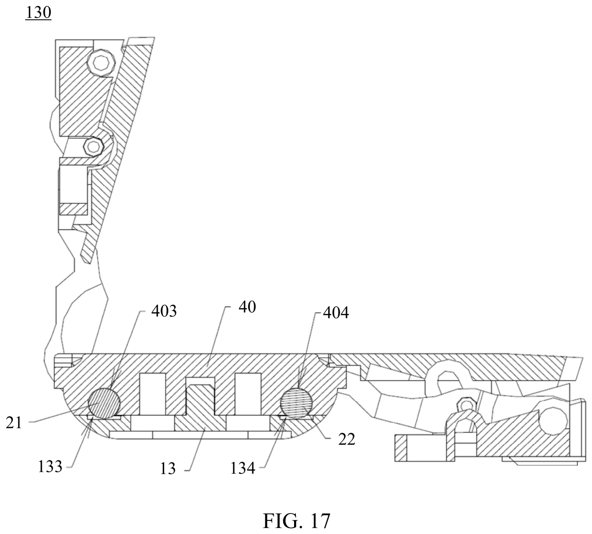

Refer to FIG. 16 and FIG. 17. FIG. 16 is a schematic diagram of a structure of the first damping assembly 20a and the first synchronous assembly 30a in the foldable mechanism 130 shown in FIG. 6, and FIG. 17 is a schematic diagram of a first cross-sectional structure of the foldable mechanism 130 shown in FIG. 5 in a half-unfolded state. The shaft cover 11 in the foldable mechanism 130 is not shown in FIG. 17. It should be noted that the "half-unfolded state" mentioned when the foldable mechanism 130 is described in this embodiment means that the foldable mechanism 130 is in a state between the folded state and the unfolded state described above. Related description later may be understood in the same way.

The first damping assembly 20a and the first synchronous assembly 30a are located in the mounting groove 111 of the shaft cover 11, and are mounted between the first bracket group 12a and the support plate 40. In this embodiment, the first damping assembly 20a includes a first rotating shaft 21, a second rotating shaft 22, two third rotating shafts (not marked in the figure), a first hinge member 23, a second hinge member 24, an assembly member 25, a first elastic member 26, a second elastic member 27, and two third elastic members 28. The first rotating shaft 21 passes through the first limiting hole 143 of the second bracket 14, and is mounted in the first pressing groove 403 of the support plate 40 and the third pressing groove 133 of the first bracket 13. The second rotating shaft 22 passes through the second limiting hole 144 of the second bracket 14, and is mounted in the second pressing groove 404 of the support plate 40 and the fourth pressing groove 134 of the first bracket 13. The first rotating shaft 21 and the second rotating shaft 22 are spaced from each other in the X-axis direction. For example, length directions of the first rotating shaft 21 and the second rotating shaft 22 are parallel to the Y-axis direction.

The first hinge member 23, the second hinge member 24, and the assembly member 25 are mounted on the base 10, and are sequentially spaced apart in the Y-axis direction. Specifically, the first hinge member 23, the second hinge member 24, and the assembly member 25 are mounted in the mounting groove 111 of the shaft cover 11, and are sleeved on the first rotating shaft 21 and the second rotating shaft 22. In the Y-axis direction, the first hinge member 23 and the second hinge member 24 are respectively located on the two opposite sides of the second bracket 14, and are spaced from the second bracket 14, and the assembly member 25 is located on one side that is of the second hinge member 24 and that faces away from the first hinge member 23, and is located between the first bracket 13 and the second hinge member 24.

In the X-axis direction, the two third rotating shafts are located between the first rotating shaft 21 and the second rotating shaft 22, and are spaced from the first rotating shaft 21 and the second rotating shaft 22. Specifically, the two third rotating shafts are mounted between the second hinge member 24 and the assembly member 25. For example, length directions of the two third rotating shafts are parallel to the Y-axis direction.

The first elastic member 26 is sleeved on the first rotating shaft 21, is located between the second hinge member 24 and the assembly member 25, and abuts against the second hinge member 24 and the assembly member 25. The second elastic member 27 is sleeved on the second rotating shaft 22, is located between the second hinge member 24 and the assembly member 25, and abuts against the second hinge member 24 and the assembly member 25. The two third elastic members 28 are respectively sleeved on the two third rotating shafts, are located between the second hinge member 24 and the assembly member 25, and abut against the second hinge member 24 and the assembly member 25. The two third elastic members 28 are located between the first elastic member 26 and the second elastic member 27 in the X-axis direction.

For example, the first elastic member 26, the second elastic member 27, and the third elastic member 28 are springs. In some other embodiments, one or more of the first elastic member 26, the second elastic member 27, and the third elastic member 28 may be springs, or one or more of the first elastic member 26, the second elastic member 27, and the third elastic member 28 may be elastic structural members having elasticity. This is not specifically limited in this application.

In this case, the fourth avoidance groove 1151 of the shaft cover 11 and the first pressing groove 403 of the support plate 40 jointly avoid the first elastic member 26, the fifth avoidance groove 1152 of the shaft cover 11 and the second pressing groove 404 of the support plate 40 jointly avoid the second elastic member 27, and each sixth avoidance groove 1153 of the shaft cover 11 and each second avoidance groove 431 of the support plate 40 jointly avoid one third elastic member 28, to prevent the shaft cover 11 and the support plate 40 from affecting elastic deformation of the first elastic member 26, the second elastic member 27, and the third elastic member 28, and ensure that the first damping assembly 20a can provide the damping force when the foldable mechanism 130 switches between the folded state and the unfolded state, thereby improving use tactile experience of the user.

It should be noted that in the foldable mechanism 130 shown in this embodiment, the four damping assemblies 20 provide the damping force through elastic deformation of springs. In some other embodiments, the damping assembly 20 may alternatively provide the damping force by using another structure, for example, provide the damping force by using a structure such as a damping sheet; or some of the plurality of damping assemblies 20 provide the damping force through elastic deformation of the springs, and the other damping assemblies 20 provide the damping force by using another structure. A structure of the damping assembly 20 is not specifically limited in this application.

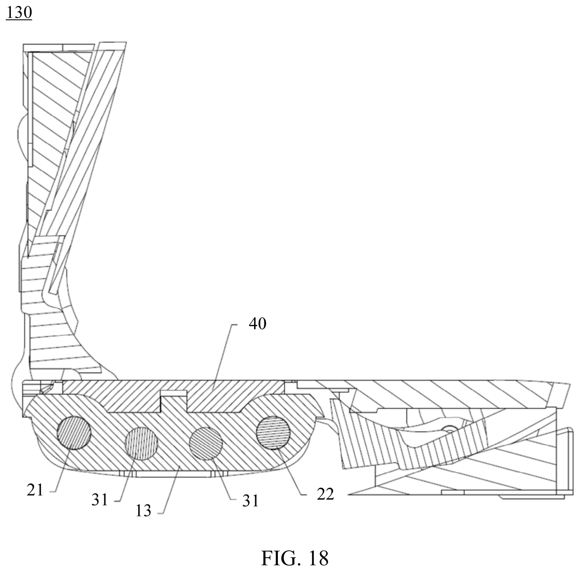

Refer to FIG. 18. FIG. 18 is a schematic diagram of a second cross-sectional structure of the foldable mechanism 130 shown in FIG. 5 in a half-unfolded state. The shaft cover 11 in the foldable mechanism 130 is not shown in FIG. 18.

In the X-axis direction, the first synchronous assembly 30a is located between the first rotating shaft 21 and the second rotating shaft 22, and is spaced from the first rotating shaft 21 and the second rotating shaft 22. In the Y-axis direction, the first synchronous assembly 30a is located on one side that is of the second hinge member 24 and that faces away from the assembly member 25, and is spaced from the second hinge member 24. The first synchronous assembly 30a is mounted between the first hinge member 23 and the second bracket 14.

In this embodiment, the first synchronous assembly 30a includes two synchronous shafts 31 and two synchronous gears 32. In the X-axis direction, the two synchronous shafts 31 are located between the first rotating shaft 21 and the second rotating shaft 22, are spaced from the first rotating shaft 21 and the second rotating shaft 22, and are spaced from each other. In the Y-axis direction, the two synchronous shafts 31 are spaced from the second hinge member 24. Specifically, one end of each synchronous shaft 31 is mounted in the third limiting hole 145 of the second bracket 14, and the other end of the synchronous shaft 31 is mounted on the first hinge member 23. For example, length directions of the two synchronous shafts 31 are parallel to the Y-axis direction. The two synchronous gears 32 are respectively sleeved on the two synchronous shafts 31, and are engaged with each other. When one synchronous gear 32 rotates relative to the base 10, the synchronous gear 32 may drive the other synchronous gear 32 to rotate relative to the base 10.

It should be noted that in the foldable mechanism 130 shown in this embodiment, the three synchronous assemblies 30 may implement synchronous rotation by using the synchronous gears. In some other embodiments, the synchronous assembly 30 may alternatively implement synchronous rotation by using another structure, for example, implement synchronous rotation through fitting between a synchronous chute and a synchronous slider, or some damping assemblies 20 of the plurality of synchronous assemblies 30 implement synchronous rotation by using synchronous gears, and the other synchronous assemblies 30 implement synchronous rotation by using another structure. A structure of the synchronous assembly 30 is not specifically limited in this application.

In the foldable mechanism 130 shown in this embodiment, the third pressing groove 133 and the fourth pressing groove 134 are designed on the first bracket 13, and the first pressing groove 403 and the second pressing groove 404 are designed on the support plate 40, so that the first rotating shaft 21 is mounted through fitting between the third pressing groove 133 and the first pressing groove 403, and the second rotating shaft 22 is mounted through fitting between the fourth pressing groove 134 and the second pressing groove 404, thereby implementing precise positioning between the first rotating shaft 21 and the second rotating shaft 22, precisely controlling movement tracks of a first secondary swing arm and a second secondary swing arm in the first connection assembly 50a, and improving movement reliability of the foldable mechanism 130.

In addition, the first limiting hole 143, the second limiting hole 144, and the third limiting hole 145 are designed on the second bracket 14, to further implement precise positioning between the first rotating shaft 21 and the second rotating shaft 22, improve precise positioning of the two synchronous shafts 31, and precisely control the movement tracks of the first secondary swing arm and the second secondary swing arm in the first connection assembly 50a, thereby further improving movement reliability of the foldable mechanism 130.

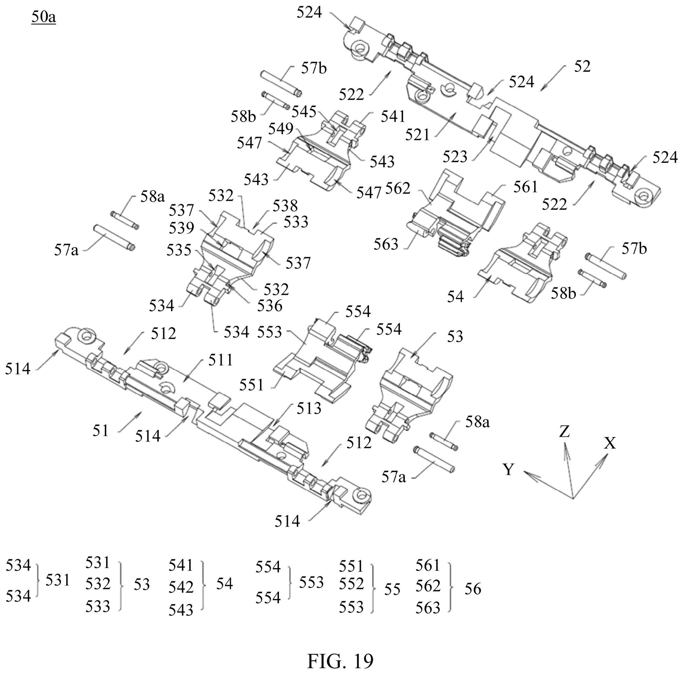

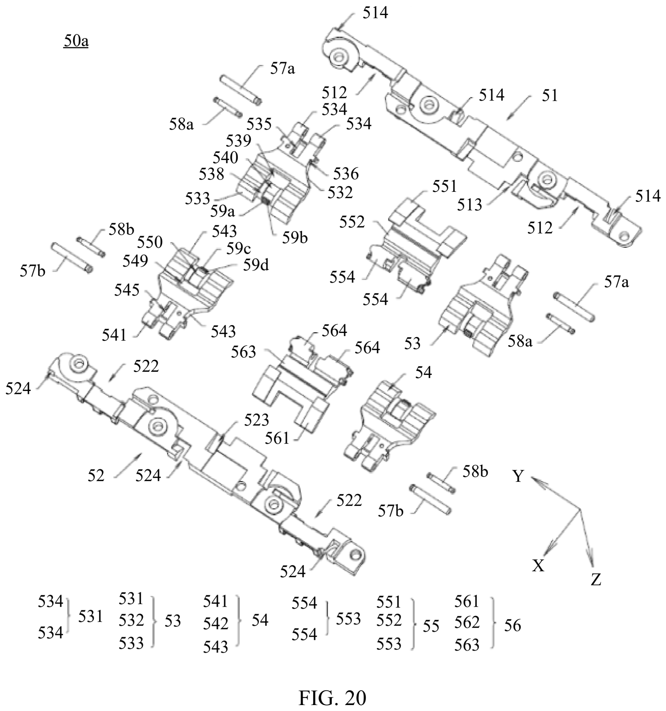

Refer to FIG. 19 and FIG. 20. FIG. 19 is a schematic diagram of a structure of the first connection assembly 50a in the foldable mechanism 130 shown in FIG. 6, and FIG. 20 is a schematic diagram of a structure of the first connection assembly 50a shown in FIG. 19 from another perspective.

The first connection assembly 50a is slidably and rotatably connected to the second slider 44 and the fourth slider 45 of the support plate 40, and is sleeved on the first rotating shaft 21 and the second rotating shaft 22 of the first damping assembly 20a. In this embodiment, the first connection assembly 50a includes a first fastening frame 51, a second fastening frame 52, a first main swing arm 53, a second main swing arm 54, a first secondary swing arm 55, and a second secondary swing arm 56. When the foldable mechanism 130 is in the unfolded state, the first fastening frame 51 is located on one side of the base 10 and is spaced from the base 10, and the second fastening frame 52 is located on the other side of the base 10, and is spaced from the base 10. For example, the first fastening frame 51 is located on a left side of the base 10, and the second fastening frame 52 is located on a right side of the base 10. The first main swing arm 53 is rotatably connected to the first fastening frame 51 and slidably and rotatably connected to the second slider 44. There are two first main swing arms 53, and the two first main swing arms 53 are spaced apart in the Y-axis direction. The second main swing arm 54 is rotatably connected to the second fastening frame 52 and slidably and rotatably connected to the fourth slider 45. There are two second main swing arms 54, and the two second main swing arms 54 are spaced apart in the Y-axis direction. The first secondary swing arm 55 is slidably connected to the first fastening frame 51 and is sleeved on the first rotating shaft 21. The second secondary swing arm 56 is slidably connected to the second fastening frame 52 and is sleeved on the first rotating shaft 21. In the Y-axis direction, the first secondary swing arm 55 is located between the two first main swing arms 53 and is spaced from the two first main swing arms 53, and the second secondary swing arm 56 is located between the two second main swing arms 54 and is spaced from the two second main swing arms 54.

In some other embodiments, there may alternatively be only one first main swing arm 53 and/or there may alternatively be only one second main swing arm 54; and/or there may alternatively be one or more than three first secondary swing arms 55 and/or there may alternatively be one or more than three second secondary swing arms 56. Quantities of first main swing arms 53, second main swing arms 54, first secondary swing arms 55, and second secondary swing arms 56 are not specifically limited in this application.

When the connection assembly 50 switches between the folded state and the unfolded state, a direction in which the first fastening frame 51, the first main swing arm 53, and the first secondary swing arm 55 rotate relative to the base 10 and the support plate 40 is a first direction, a direction in which the second fastening frame 52, the second main swing arm 54, and the second secondary swing arm 56 rotate relative to the base 10 and the support plate 40 is a second direction, and the second direction is opposite to the first direction. For example, when the connection assembly 50 switches between the folded state and the unfolded state, the first fastening frame 51, the first main swing arm 53, and the first secondary swing arm 55 rotate relative to the base 10 and the support plate 40 in a counter clockwise direction, and the second fastening frame 52, the second main swing arm 54, and the second secondary swing arm 56 rotate relative to the base 10 and the support plate 40 in a clockwise direction. When the connection assembly 50 switches between the unfolded state and the folded state, the first main swing arm 53 and the first secondary swing arm 55 rotate relative to the base 10 and the support plate 40 in the clockwise direction, and the second main swing arm 54 and the second secondary swing arm 56 rotate relative to the base 10 and the support plate 40 in the counter clockwise direction.

A first accommodating notch 511, a first assembly notch 512, a first sliding hole 513, and a first guide groove 514 are disposed on the first fastening frame 51. An opening of the first accommodating notch 511 is located on a top surface (not marked in the figure) of the first fastening frame 51. The first accommodating notch 511 is recessed on the top surface of the first fastening frame 51 in a direction (the negative direction of the Z axis shown in the figure) toward a bottom surface (not marked in the figure), and runs through a front end surface (not marked in the figure), a rear end surface (not marked in the figure), and a right side surface (not marked in the figure) of the first fastening frame 51. In some other embodiments, the first accommodating notch 511 may alternatively not run through the front end surface of the first fastening frame 51, the first accommodating notch 511 may alternatively not run through the rear end surface of the first fastening frame 51, and/or the first accommodating notch 511 may alternatively not run through the right side surface of the first fastening frame 51.

An opening of the first assembly notch 512 is located on the right side surface of the first fastening frame 51. The first assembly notch 512 is recessed on the right side surface of the first fastening frame 51 in a direction (the negative direction of the X axis shown in the figure) toward a left side surface (not marked in the figure), and runs through a bottom surface of the first fastening frame 51 and a bottom wall surface (not marked in the figure) of the first accommodating notch 511. In some other embodiments, the first assembly notch 512 may alternatively not run through the bottom surface of the first fastening frame 51 and/or the first assembly notch 512 may alternatively not run through the bottom wall surface of the first accommodating notch 511.

The first assembly notch 512 has two first sidewalls (not marked in the figure) and a first bottom wall (not marked in the figure). The two first sidewalls are spaced apart and disposed opposite to each other in the Y-axis direction. The first bottom wall is connected between the two first sidewalls. A mounting boss (not marked in the figure) is convexly disposed on the first bottom wall, and the mounting boss is spaced from the two first sidewalls. A through hole (not marked in the figure) is disposed on the mounting boss, and the through hole runs through the mounting boss in the Y-axis direction. The through hole is a circular hole, and an axis of the through hole is parallel to the Y-axis direction. In some other embodiments, the mounting boss may alternatively not be convexly disposed on the first bottom wall.

In this embodiment, there are two first assembly notches 512, and the first assembly notches 512 are spaced apart in the Y-axis direction. In some other embodiments, there may alternatively be only one or more than three first assembly notches 512. A quantity of first assembly notches 512 is not specifically limited in this application.

In addition, the first connection assembly 50a further includes two first pin shafts 57a, and each first pin shaft 57a passes through the through hole in one first assembly notch 512. Two ends of each first pin shaft 57a are respectively mounted on the two first sidewalls of one first assembly notch 512. The first pin shaft 57a is a circular shaft, and an axis of the first pin shaft 57a is parallel to the Y-axis direction. For example, the first pin shaft 57a is coaxial with the through hole.

In the Y-axis direction, the first sliding hole 513 is located on one side of the first assembly notch 512, and is spaced from the first assembly notch 512. Specifically, the first sliding hole 513 is located between the two first assembly notches 512. An opening of the first sliding hole 513 is located on the right side surface of the first fastening frame 51. The first sliding hole 513 is recessed on the right side surface of the first fastening frame 51 in the direction toward the left side surface, and runs through the bottom wall surface of the first accommodating notch 511. It should be understood that the first sliding hole 513 is not limited to a square hole shown in the figure, and may alternatively be a circular hole, a special-shaped hole, or the like. In some other embodiments, the first sliding hole 513 may alternatively not run through the bottom wall surface of the first accommodating notch 511.

In the Y-axis direction, the first guide groove 514 is located on one side of the first sliding hole 513, and is spaced from the first assembly notch 512 and the first sliding hole 513. An opening of the first guide groove 514 is located on the bottom wall surface of the first accommodating notch 511. The first guide groove 514 is recessed on the bottom wall surface of the first accommodating notch 511 in a direction (the negative direction of the Z axis shown in the figure) toward the bottom surface of the first fastening frame 51, and runs through the left side surface of the first fastening frame 51. The first guide groove 514 is an arc-shaped groove. That is, the bottom wall surface of the first guide groove 514 is an arc-shaped surface. For example, an axis of the first guide groove 514 is parallel to the Y-axis direction. In some other embodiments, the first guide groove 514 may alternatively not run through the left side surface of the first fastening frame 51.

In this embodiment, there are three first guide grooves 514. One of the first guide grooves 514 is located at a front part of the first fastening frame 51, is located on one side that is of the first assembly notch 512 and that faces away from the first sliding hole 513, and runs through the front end surface of the first fastening frame 51. One of the first guide grooves 514 is located at a middle part of the first fastening frame 51, is located between the first assembly notch 512 and the first sliding hole 513, and runs through the top surface of the first fastening frame 51. The remaining one of the first guide grooves 514 is located at a rear part of the first fastening frame 51, is located on the side that is of the first assembly notch 512 and that faces away from the first sliding hole 513, and runs through the top surface of the first fastening frame 51.

In some other embodiments, the first guide groove 514 may alternatively not run through the front end surface of the first fastening frame 51 and/or the first guide groove 514 may alternatively not run through the top surface of the first fastening frame 51; or there may alternatively be less than two or more than four first guide grooves 514. A quantity, structures, and positions of first guide grooves 514 are not specifically limited in this application.

A second accommodating notch 521, a second assembly notch 522, a second sliding hole 523, and a second guide groove 524 are disposed on the second fastening frame 52. For structures of the second accommodating notch 521, the second assembly notch 522, the second sliding hole 523, and the second guide groove 524, respectively refer to related descriptions of the first accommodating notch 511, the first assembly notch 512, the first sliding hole 513, and the first guide groove 514 in the first fastening frame 51. Details are not described herein again. The second accommodating notch 521 further runs through a left side surface of the second fastening frame 52. Openings of the second assembly notch 522 and the second sliding hole 523 are located on the left side surface of the second fastening frame 52.

In addition, the first connection assembly 50a further includes two second pin shafts 57b, and each second pin shaft 57b passes through the through hole in one second assembly notch 522. For a structure of the second pin shaft 57b and a fitting relationship between the second pin shaft 57b and the second fastening frame 52, refer to related descriptions of a structure of the first pin shaft 57a and a fitting relationship between the first pin shaft 57a and the first fastening frame 51 described above. Details are not described herein again.

In this embodiment, the first main swing arm 53 includes a first rotating part 531, a first connection part 532, and a first sliding part 533. The first rotating part 531 is rotatably connected to the first fastening frame 51, and the first sliding part 533 is slidably and rotatably connected to the second slider 44 and the first slider 46. The first connection part 532 is connected between the first rotating part 531 and the first sliding part 533. The first rotating part 531, the first connection part 532, and the first sliding part 533 may be integrally formed.

A structure of the first rotating part 531 fits with a structure of the first assembly notch 512. The first rotating part 531 includes two first rotating sub-parts 534, and the two first rotating sub-parts 534 are spaced apart in the Y-axis direction. The two first rotating sub-parts 534 may be sleeved on the first pin shaft 57a, and may rotate relative to the first pin shaft 57a, to implement rotatable connection between the first rotating part 531 and the first pin shaft 57a, and further implement rotatable connection between the first main swing arm 53 and the first fastening frame 51. The two first rotating sub-parts 534 are respectively located on two opposite sides of the mounting boss of the first assembly notch 512 in the Y-axis direction.

A first avoidance hole 535 and a first mounting hole 536 are disposed on the first connection part 532. The first avoidance hole 535 is located at a middle part of the first connection part 532, and runs through the first connection part 532 in a thickness direction (the Z-axis direction shown in the figure) of the first connection part 532. The first mounting hole 536 runs through the first rotating sub-part 534 in the Y-axis direction, and runs through a hole wall of the first avoidance hole 535, to communicate with the first avoidance hole 535. For example, the first mounting hole 536 is a circular hole, and an axis of the first mounting hole 536 is parallel to the Y-axis direction.

In addition, the first connection assembly 50a further includes two first sliding shafts 58a, and each first sliding shaft 58a is mounted in the first mounting hole 536 of one first main swing arm 53. The first sliding shaft 58a is a circular shaft, and an axis of the first sliding shaft 58a is parallel to the Y-axis direction. For example, the first sliding shaft 58a is coaxial with the first mounting hole 536.

The first sliding part 533 is mounted in the first mounting notch 405 (as shown in FIG. 10 and FIG. 11), and may slide and rotate relative to the support plate 40 in the first mounting notch 405. The first sliding part 533 includes two second end surfaces (not marked in the figure). The two second end surfaces face away from each other in the Y-axis direction. In a thickness direction of the first sliding part 533, a top surface of the first sliding part 533 and a bottom surface of the first sliding part 533 face away from each other, and are connected between the two second end surfaces. The bottom surface of the first sliding part 533 is an arc-shaped surface.

Two first chutes 537, a third chute 538, a first clearance notch 539, and a first groove 540 are disposed on the first sliding part 533. An opening of each first chute 537 is located on one second end surface. The first chute 537 is recessed on one second end surface in a direction (the Y-axis direction shown in the figure) toward the other second end surface. For example, the first chute 537 further runs through the top surface of the first sliding part 533. The first chute 537 is an arc-shaped groove that fits with the second slider 44 (as shown in FIG. 10 and FIG. 11), and an axis of the first chute 537 is parallel to the Y-axis direction.

An opening of the third chute 538 is located on the bottom surface of the first sliding part 533. The third chute 538 is recessed on the bottom surface of the first sliding part 533 in a direction (the positive direction of the Z axis shown in the figure) toward the top surface of the first sliding part 533. For example, the third chute 538 further runs through the top surface of the first sliding part 533. The third chute 538 is an arc-shaped groove that fits with the first slider 46 (as shown in FIG. 10 and FIG. 11), and the third chute 538 is coaxial with the first chute 537. The first clearance notch 539 is located on one side that is of the first sliding part 533 and that faces the first connection part 532, and runs through the first sliding part 538 in the thickness direction (the Z-axis direction shown in the figure) of the first sliding part 533. The first clearance notch 539 is located between the two first chutes 537, is spaced from the two first chutes 537, and is communicated with the third chute 538. Specifically, openings of the first clearance notch 539 and the first groove 540 are located on a bottom wall surface of the third chute 538. The first clearance notch 539 and the first groove 540 are recessed on the bottom wall surface of the third chute 538 in a direction toward the top surface of the first sliding part 533. The first clearance notch 539 runs through the top surface of the first sliding part 533. The first groove 540 runs through a groove sidewall of the first clearance notch 539, and is communicated with the first clearance notch 539.

In addition, a first stopping block 59a is further disposed on the first sliding part 533, and the first stopping block 59a is disposed on the bottom surface of the first sliding part 533. Specifically, the first stopping block 59a is disposed on the bottom wall surface of the first groove 540, and protrudes from the bottom wall surface of the first groove 540 in a direction facing away from the bottom wall surface of the first groove 540. The first stopping block 59a is located on one side that is of the first clearance notch 539 and that faces away from the first connection part 532, and is spaced from the first clearance notch 539. The first stopping block 59a includes a first stopping surface 59b, and the first stopping surface 59b is a surface that is of the first stopping block 59a and that faces the first clearance notch 539.

Refer to FIG. 8 and FIG. 9. Two second sliders 44 may respectively slide and rotate in the two first chutes 537, the first slider 46 may slide and rotate in the third chute 538, and the first stopping block 59a may slide and rotate in the first avoidance chute 461 of the first slider 46, so that the first sliding part 533 can slide and rotate relative to the support plate 40 in the first mounting notch 405, thereby implementing slidable and rotatable connection between the first main swing arm 53 and the support plate 40. The first chute 537 is coaxial with the second slider 44, and the third chute 538 is coaxial with the first slider 46. In this case, the first avoidance groove 1381 of the first bracket 13 may avoid the first sliding part 533. For example, a groove wall surface of the first avoidance groove 1381 may be spaced from the first sliding part 533, to prevent the first bracket 13 from affecting movement of the first sliding part 533 relative to the support plate 40, thereby ensuring smooth movement of the first sliding part 533 relative to the support plate 40.

When the first main swing arm 53 is unfolded relative to the base 10 and the support plate 40, for example, when an included angle between the first main swing arm 53 and both of the base 10 and the support plate 40 is 180 degrees, the first clearance notch 539 is communicated with the first mounting notch 405 and the first avoidance notch 462, the first groove 540 is disposed opposite to the first avoidance chute 461 of the first slider 46, and the first stopping arm 135 of the first bracket 13 may extend into the first mounting notch 405, the first avoidance notch 462, and the first clearance notch 539. The first avoidance chute 461 of the first slider 46 avoids the first stopping block 59a. For example, a groove wall surface of the first avoidance chute 461 is spaced from the first stopping block 59a, to prevent the first slider 46 from affecting movement of the first sliding part 533 in the first mounting notch 405, thereby ensuring smooth movement of the foldable mechanism 130.

When the first main swing arm 53 is folded relative to the base 10 and the support plate 40, for example, when an included angle between the first main swing arm 53 and both of the base 10 and the support plate 40 is 90 degrees, the first clearance notch 539 is spaced from the first mounting notch 405, the first stopping block 59a extends into the first avoidance notch 462, the third stopping block 1351 of the first stopping arm 135 extends into the first groove 540, and the second stopping surface 1352 of the third stopping block 1351 abuts against the first stopping surface 59b of the first stopping block 59a, to implement a stopping function of the support plate 40 for the first main swing arm 53.

In the foldable mechanism 130 shown in this embodiment, the second slider 44 and the first slider 46 are designed on the support plate 40 to implement slidable and rotatable connection between the support plate 40 and the first main swing arm 53, so that there is no assembly error between shapes and sizes of the second slider 44 and the first slider 46 of the support plate 40 and a position and a size of the first main swing arm 53, that is, so that there is no assembly error between a shape and a size of a virtual swing arm chute of the support plate 40 and a position and a size of a virtual swing arm, thereby precisely controlling a movement track of the foldable mechanism 130, and improving use reliability of the foldable mechanism 130.

In addition, the first stopping arm 135 is designed on the first bracket 13, and the first stopping block 59a is designed on the first main swing arm 53, to implement the stopping function for the first main swing arm 53 through fitting between the first stopping arm 135 and the first stopping block 59a, thereby enhancing strength of the third stopping block 1351 and the first stopping block 59a in a limited space, and ensuring assembly convenience and precision of the base 10, the support plate 40, and the first main swing arm 53.

Refer to FIG. 19 and FIG. 20. The second main swing arm 54 includes a second rotating part 541, a second connection part 542, and a second sliding part 543. The second rotating part 541 is rotatably connected to the second fastening frame 52, and the second sliding part 543 is slidably and rotatably connected to the fourth slider 45. The second connection part 542 is connected between the second rotating part 541 and the second sliding part 543. For a structure of the second main swing arm 54 and fitting relationships between the second main swing arm 54 and both of the second fastening frame 52 and the base 10, refer to related description of a structure of the first main swing arm 53 and fitting relationships between the first main swing arm 53 and both of the first fastening frame 51 and the base 10.

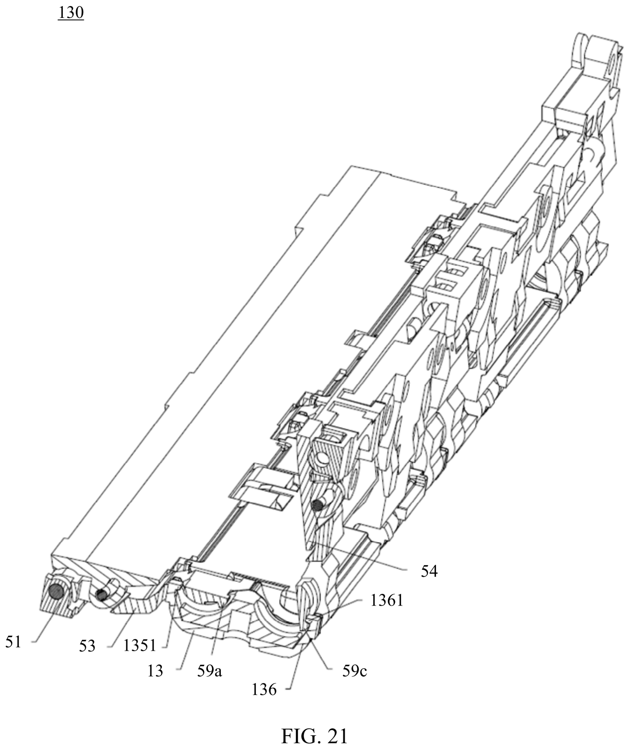

Refer to FIG. 8, FIG. 9, and FIG. 21. FIG. 21 is a schematic diagram of a third cross-sectional structure of the foldable mechanism 130 shown in FIG. 5 in a half-unfolded state. The shaft cover 11 in the foldable mechanism 130 is not shown in FIG. 21.

Two fourth sliders 45 may respectively slide and rotate in the two second chutes 547, the third slider 47 may slide and rotate in the fourth chute 548, and the second stopping block 59c may slide and rotate in the second avoidance chute 471 of the third slider 47, so that the second sliding part 543 can slide and rotate relative to the support plate 40 in the second mounting notch 406, thereby implementing slidable and rotatable connection between the second main swing arm 54 and the support plate 40. The second chute 547 is coaxial with the fourth slider 45, and the fourth chute 548 is coaxial with the third slider 47. In this case, the third avoidance groove 1391 of the first bracket 13 may avoid the second sliding part 543. For example, a groove wall surface of the third avoidance groove 1391 may be spaced from the second sliding part 543, to prevent the first bracket 13 from affecting movement of the second sliding part 543 relative to the support plate 40, thereby ensuring smooth movement of the second sliding part 543 relative to the support plate 40.

When the second main swing arm 54 is unfolded relative to the base 10 and the support plate 40, for example, when an included angle between the second main swing arm 54 and both of the base 10 and the support plate 40 is 180 degrees, a second clearance notch 549 is communicated with the second mounting notch 406 and the second avoidance notch 472, a second groove 550 is disposed opposite to the second avoidance chute 471 of the third slider 47, and the second stopping arm 136 of the first bracket 13 may extend into the second mounting notch 406, the second avoidance notch 472, and the second clearance notch 549. The second avoidance chute 471 of the third slider 47 avoids the second stopping block 59c. For example, a groove wall surface of the second avoidance chute 471 is spaced from the second stopping block 59c, to prevent the third slider 47 from affecting movement of the second sliding part 543 in the second mounting notch 406, thereby ensuring smooth movement of the foldable mechanism 130.

When the second main swing arm 54 is folded relative to the base 10 and the support plate 40, for example, when an included angle between the second main swing arm 54 and both of the base 10 and the support plate 40 is 90 degrees, the second clearance notch 549 is spaced from the second mounting notch 406, the second stopping block 59c extends into the second avoidance notch 472, the fourth stopping block 1361 of the second stopping arm 136 extends into the second groove 550, and the fourth stopping surface 1362 of the fourth stopping block 1361 abuts against the third stopping surface 59d of the second stopping block 59c, to implement a stopping function of the support plate 40 for the second main swing arm 54.

In the foldable mechanism 130 shown in this embodiment, the fourth slider 45 and the third slider 47 are designed on the support plate 40 to implement slidable and rotatable connection between the support plate 40 and the second main swing arm 54, so that there is no assembly error between shapes and sizes of the fourth slider 45 and the third slider 47 of the support plate 40 and a position and a size of the second main swing arm 54, that is, so that there is no assembly error between a shape and a size of a virtual swing arm chute of the support plate 40 and a position and a size of a virtual swing arm, thereby precisely controlling a movement track of the foldable mechanism 130, and improving use reliability of the foldable mechanism 130.

In addition, the second stopping arm 136 is designed on the support plate 40, and the second stopping block 59c is designed on the second main swing arm 54, to implement the stopping function for the second main swing arm 54 through fitting between the second stopping arm 136 and the second stopping block 59c, thereby enhancing strength of the fourth stopping block 1361 and the second stopping block 59c in a limited space, and ensuring assembly convenience and precision of the base 10, the support plate 40, and the second main swing arm 54.

In this embodiment, the first secondary swing arm 55 includes a third sliding part 551, a third connection part 552, and a third rotating part 553. The third sliding part 551 is slidably and rotatably connected to the first fastening frame 51, and the third rotating part 553 is sleeved on the first rotating shaft 21. The third connection part 552 is fixedly connected between the third rotating part 553 and the third sliding part 551, and passes through the third mounting notch 407. The third sliding part 551, the third connection part 552, and the third rotating part 553 may be integrally formed.

The third sliding part 551 is in a flat plate-like shape. A structure of the third sliding part 551 fits with a structure of the first sliding hole 513. The third sliding part 551 may pass through the first sliding hole 513, and may slide and rotate relative to the first fastening frame 51 in the first sliding hole 513, to implement slidable connection between the first secondary swing arm 55 and the first fastening frame 51.

The third rotating part 553 includes two third rotating sub-parts 555, and the two third rotating sub-parts 555 are spaced apart in the Y-axis direction. The two third rotating sub-parts 555 may be sleeved on the first rotating shaft 21, and may rotate relative to the first rotating shaft 21, to implement rotatable sub-connection between the third rotating part 553 and the first rotating shaft 21, and further implement rotatable connection between the first secondary swing arm 55 and both of the base 10 and the support plate 40.

The second secondary swing arm 56 includes a fourth sliding part 561, a fourth connection part 562, and a fourth rotating part 563. The fourth sliding part 561 is slidably and rotatably connected to the second fastening frame 52, and the fourth rotating part 563 is sleeved on the second rotating shaft 22. The fourth connection part 562 is fixedly connected between the fourth rotating part 563 and the fourth sliding part 561, and passes through the fourth mounting notch 408. The fourth sliding part 561, the fourth connection part 562, and the fourth rotating part 563 may be integrally formed. In this embodiment, for a structure of the second secondary swing arm 56 and fitting relationships between the second secondary swing arm 56 and both of the second fastening frame 52 and the base 10, refer to related description of a structure of the first secondary swing arm 55 and fitting relationships between the first secondary swing arm 55 and both of the first fastening frame 51 and the base 10.

In addition, the first connection assembly 50a is further hinged with the first hinge member 23 and the second hinge member 24 in the first damping assembly 20a. Specifically, the first secondary swing arm 55 and the second secondary swing arm 56 are further hinged with the first hinge member 23 and the second hinge member 24. The third rotating part 553 and the fourth rotating part 563 are located between the first hinge member 23 and the second hinge member 24, and are hinged with the first hinge member 23 and the second hinge member 24.

When the first secondary swing arm 55 and the second secondary swing arm 56 rotate relative to the base 10, the first secondary swing arm 55 and the second secondary swing arm 56 jointly abut against the second hinge member 24, so that the first hinge member 23 moves relative to the assembly member 25 in the Y-axis direction. The first elastic member 26, the second elastic member 27, and the two third elastic members 28 may be elastically deformed or elastically recovered, so that the damping assembly 20 can provide the damping force. In a process in which the user folds or unfolds the foldable terminal 1000, the user may feel a change of the damping force generated by the damping assembly 20, and the user may have good tactile experience, thereby improving user experience. In other words, the first secondary swing arm 55 and the second secondary swing arm 56 may be further used as damping swing arms, to omit the damping swing arms, thereby implementing structure simplification of the foldable mechanism 130.

In addition, the first connection assembly 50a is further engaged with the two synchronous gears 32 of the first synchronous assembly 30a. Specifically, the first secondary swing arm 55 and the second secondary swing arm 56 are respectively engaged with the two synchronous gears 32. The third rotating part 553 and the fourth rotating part 563 are respectively engaged with the two synchronous gears 32. For example, an outer surface of the third rotating part 553 and an outer surface of the fourth rotating part 563 are gear surfaces, and the outer surface of the third rotating part 553 and the outer surface of the fourth rotating part 563 are respectively engaged with the two synchronous gears 32.

The first secondary swing arm 55 drives one synchronous gear 32 to rotate relative to the base 10, the synchronous gear 32 drives the other synchronous gear 32 to rotate relative to the base 10, and the other synchronous gear 32 drives the second secondary swing arm 56 to rotate relative to the base 10, to implement relative rotation between the first secondary swing arm 55 and the second secondary swing arm 56. Similarly, when the second secondary swing arm 56 rotates relative to the base 10, the synchronous assembly 30 may synchronously drive the first secondary swing arm 55 to rotate relative to the base 10. In other words, the first secondary swing arm 55 and the second secondary swing arm 56 may be further used as synchronous swing arms, to omit the synchronous swing arms, thereby implementing structure simplification of the foldable mechanism 130.

Refer to FIG. 6. In the foldable mechanism 130 shown in this embodiment, the first connection assembly 50a, the second connection assembly 50b has a same structure as the first connection assembly 50a. A difference between the third connection assembly 50c and both of the first connection assembly 50a and the second connection assembly 50b is that there are two first secondary swing arms 55 and two second secondary swing arms 56, the two first secondary swing arms 55 and the two first main swing arms 53 are alternately arranged in the Y-axis direction, and the two second secondary swing arms 56 and the two second main swing arms 54 are alternately arranged in the Y-axis direction.

In this embodiment, the first fastening frame 51 of the first connection assembly 50a, the first fastening frame 51 of the second connection assembly 50b, and the first fastening frame 51 of the third connection assembly 50c are structural members independent of each other, and the second fastening frame 52 of the first connection assembly 50a, the second fastening frame 52 of the second connection assembly 50b, and the second fastening frame 52 of the third connection assembly 50c are structural members independent of each other. In some other embodiments, the first fastening frame 51 of the first connection assembly 50a, the first fastening frame 51 of the second connection assembly 50b, and the first fastening frame 51 of the third connection assembly 50c may alternatively be a plurality of parts of an integrated structural member, and/or the second fastening frame 52 of the first connection assembly 50a, the second fastening frame 52 of the second connection assembly 50b, and the second fastening frame 52 of the third connection assembly 50c may alternatively be a plurality of parts of the integrated structural member.

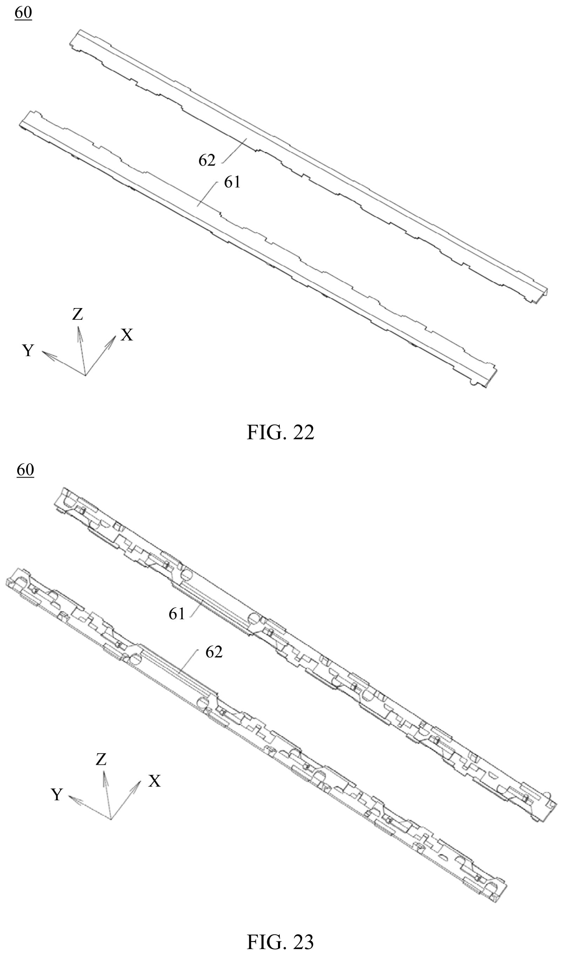

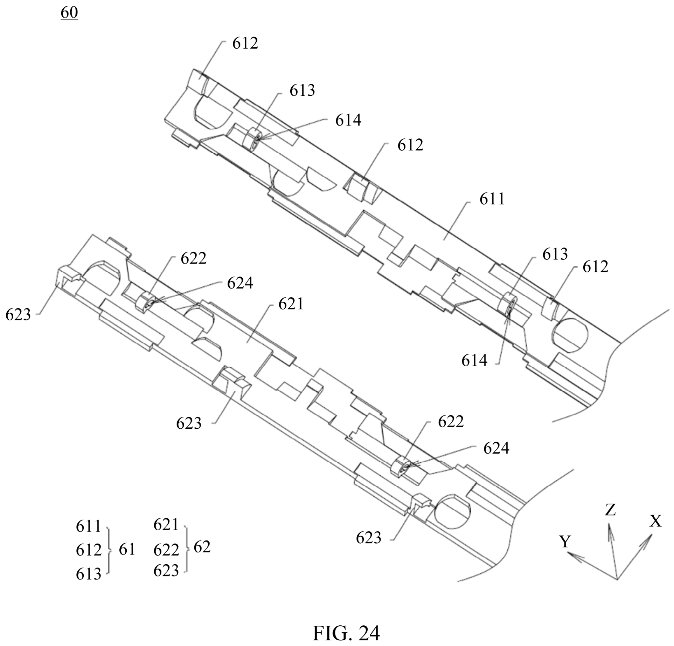

Refer to FIG. 22 to FIG. 24. FIG. 22 is a schematic diagram of a structure of the door plate assembly 60 in the foldable mechanism 130 shown in FIG. 6, FIG. 23 is a schematic diagram of a structure of the door plate assembly 60 shown in FIG. 22 from another perspective, and FIG. 24 is a schematic diagram of a local structure of the door plate assembly 60 shown in FIG. 23.

In this embodiment, the door plate assembly 60 includes a first door plate 61 and a second door plate 62. The first door plate 61 is slidably and rotatably connected to the first fastening frame 51 of each connection assembly 50, and is slidably and rotatably connected to the first main swing arm 53 of each connection assembly 50. The second door plate 62 is slidably and rotatably connected to the second fastening frame 52 of each connection assembly 50, and is slidably and rotatably connected to the second main swing arm 54 of each connection assembly 50.

The first door plate 61 includes a first support plate 611, a first bump 612, and a first guide slider 613, and the first bump 612 and the first guide slider 613 are fixedly connected to the first support plate 611. The first support plate 611, the first bump 612, and the first guide slider 613 may be integrally formed, to enhance structural strength of the first door plate 61 and ensure structural stability of the first door plate 61. In some other embodiments, the first door plate 61 may alternatively be an integrated structural member formed in an assembly manner. For example, the first bump 612 may be fixedly connected to the first support plate 611 in a welding or bonding manner, and/or the first guide slider 613 may be fixedly connected to the first support plate 611 in a welding or bonding manner.

The first support plate 611 is roughly a plate in a long strip plate-like shape, and extends in the Y-axis direction. The first bump 612 and the first guide slider 613 are fixedly connected to a bottom surface (not marked in the figure) of the first support plate 611, and are spaced apart. The first bump 612 and the first guide slider 613 extend from the bottom surface of the first support plate 611 in a direction (the negative direction of the Z axis shown in the figure) facing away from a top surface (not marked in the figure). A third sliding hole 614 is disposed on the first bump 612, and the third sliding hole 614 runs through the first bump 612 in the Y-axis direction. The third sliding hole 614 is an arc-shaped hole, and an axis of the third sliding hole 614 is parallel to the Y-axis direction. In addition, the third sliding hole 614 has a folding position and a flattening position, and the folding position of the third sliding hole 614 is located on an inner side of the flattening position of the third sliding hole 614. For example, the folding position of the third sliding hole 614 is located on an innermost side of the third sliding hole 614, and the flattening position of the third sliding hole 614 is located on an outermost side of the third sliding hole 614.

In this embodiment, there are six first bumps 612, and the six first bumps 612 are sequentially spaced apart in the Y-axis direction. Two of the first bumps 612 are fixedly connected to a front part of the first support plate 611, two of the first bumps 612 are fixedly connected to a middle part of the first support plate 611, and two of the first bumps 612 are fixedly connected to a rear part of the first support plate 611. In some other embodiments, there may alternatively be less than five or more than seven first bumps 612. A quantity of first bumps 612 is not specifically limited in this application.

A structure of the first guide slider 613 fits with a structure of the first guide groove 514 (as shown in FIG. 18 and FIG. 19) of the first fastening frame 51. In this embodiment, there are eight first guide sliders 613, and the eight first guide sliders 613 are sequentially spaced apart in the Y-axis direction. Three of the first guide sliders 613 are fixedly connected to the front part of the first support plate 611, and are alternately arranged with two first bumps 612. Three of the first guide sliders 613 are fixedly connected to the middle part of the first support plate 611, and are alternately arranged with two first bumps 612. Two of the first guide sliders 613 are fixedly connected to the rear part of the first support plate 611, and are located on two opposite sides of two first bumps 612. In some other embodiments, there may alternatively be less than seven or more than nine first guide sliders 613. A quantity of first guide sliders 613 is not specifically limited in this application.

The second door plate 62 includes a second support plate 621, a second bump 622, and a second guide slider 623, and the second bump 622 and the second guide slider 623 are fixedly connected to the second support plate 621. For a structure of the second door plate 62, refer to related description of the first door plate 61. Details are not described herein again.

Refer to FIG. 6 and FIG. 19 to FIG. 21. In the first door plate 61, the first support plate 611 may be accommodated in the first accommodating notch 511 of the first fastening frame 51, and the first guide slider 613 may be mounted in the first guide groove 514 of the first fastening frame 51, and may slide and rotate relative to the first fastening frame 51 in the first guide groove 514, to implement slidable and rotatable connection between the first door plate 61 and the first fastening frame 51, thereby improving assembly stability between the first door plate 61 and the connection assembly 50. In addition, the first bump 612 may pass through the first avoidance hole 535 of the first main swing arm 53, and the first sliding shaft 58a further passes through the third sliding hole 614 of the first bump 612, and may be driven by the first main swing arm 53 to slide and rotate relative to the first door plate 61 in the third sliding hole 614, to implement slidable and rotatable connection between the first main swing arm 53 and the first door plate 61.

In the second door plate 62, the second support plate 621 may be accommodated in the second accommodating notch 521 of the second fastening frame 52, and the second guide slider 623 may be mounted in the second guide groove 524 of the second fastening frame 52, and may slide and rotate relative to the second fastening frame 52 in the second guide groove 524, to implement slidable and rotatable connection between the second door plate 62 and the second fastening frame 52, thereby improving assembly stability between the second door plate 62 and the connection assembly 50. In addition, the second bump 622 may pass through the second avoidance hole 545 of the second main swing arm 54, and the second sliding shaft 58b further passes through the second sliding hole 523 of the second bump 622 in the second door plate 62, and may be driven by the second main swing arm 54 to slide and rotate relative to the second door plate 62 in the second sliding hole 523 of the second bump 622, to implement slidable and rotatable connection between the second main swing arm 54 and the second door plate 62.

As shown in FIG. 5, when the foldable mechanism 130 is in the flattened state, the first connection assembly 50a and the door plate assembly 60 are in the flattened state, the first door plate 61 and the second door plate 62 are located on two opposite sides of the base 10 and are flattened relative to each other, and a top surface of the first door plate 61 (that is, a top surface of the first support plate 611) is flush with a top surface of the second door plate 62 (that is, a top surface of the second support plate 621). The first sliding shaft 58a is located in the flattening position of the third sliding hole 614, and the second sliding shaft 58b is located in the flattening position of the second sliding hole 523. The first fastening frame 51 and the second fastening frame 52 are located on the two opposite sides of the base 10 and are flattened relative to each other, the first main swing arm 53 and the second main swing arm 54 are flattened relative to each other, and the first secondary swing arm 55 and the second secondary swing arm 56 are flattened relative to each other.

In this case, the top surface of the first door plate 61, the top surface of the second door plate 62, and the top surface of the support plate 40 jointly form a support surface 1302. The support surface 1302 may support the foldable part 230 of the display 200 to ensure good display of the display 200. The support surface 1302 may be flush with the top surface of the first housing 110 and the top surface of the second housing 120, so that the foldable mechanism 130 can support the display 200 together with the first housing 110 and the second housing 120, thereby implementing effective support of the foldable apparatus in the flattened state (not shown in the figure) for the display 200.

In a process of folding the foldable mechanism 130, for example, in a process in which the foldable mechanism 130 switches from the flattened state to the folded state, the first connection assembly 50a switches from the flattened state to the folded state, the first main swing arm 53 drives the first door plate 61 to rotate relative to the base 10, and the second main swing arm 54 drives the second door plate 62 to rotate relative to the base 10, so that the door plate assembly 60 switches from the flattened state to the folded state. The first sliding shaft 58a slides from the flattening position to the folding position in the third sliding hole 614, and the second sliding shaft 58b slides from the flattening position to the folding position in the second sliding hole 523.

When the foldable mechanism 130 is in the folded state, the first connection assembly 50a and the door plate assembly 60 are in the folded state, the first sliding shaft 58a is located in the folding position of the third sliding hole 614, and the second sliding shaft 58b is located in the folding position of the second sliding hole 523. The first fastening frame 51 and the second fastening frame 52 are folded relative to each other, the first main swing arm 53 and the second main swing arm 54 are folded relative to each other, the first secondary swing arm 55 and the second secondary swing arm 56 are folded relative to each other, and the first door plate 61 and the second door plate 62 are folded relative to each other.

It can be understood that in a process of unfolding the foldable mechanism 130, for example, in a process in which the foldable mechanism 130 switches from the folded state to the flattened state, the first connection assembly 50a switches from the folded state to the flattened state, the first main swing arm 53 drives the first door plate 61 to rotate relative to the base 10, and the second main swing arm 54 drives the second door plate 62 to rotate relative to the base 10, so that the door plate assembly 60 switches from the folded state to the flattened state. The first sliding shaft 58a slides from the folding position to the flattening position in the third sliding hole 614, and the second sliding shaft 58b slides from the folding position to the flattening position in the second sliding hole 523, so that the door plate assembly 60 switches from the folded state to the flattened state.

Therefore, the first door plate 61 and the second door plate 62 may rotate relative to the base 10 by using the connection assemblies 50 (such as the first connection assembly 50a and the second connection assembly 50b). In other words, the first main swing arm 53 and the second main swing arm 54 of the connection assembly 50 may simultaneously play a role of pressing plate swing arms. That is, the pressing plate swing arms are omitted from the foldable mechanism 130 shown in this embodiment, thereby simplifying an overall structure of the foldable mechanism 130, and implementing lightweight design of the foldable terminal 1000.

In the foldable mechanism 130 shown in this embodiment, the support plate 40 is an integrally formed structural member, so that overall strength and rigidity of the foldable mechanism 130 can be enhanced while the foldable mechanism 130 is lightened and thinned, thereby improving use reliability of the foldable mechanism 130. In addition, the integrally formed support plate 40 increases a support area and support force for the display 200, improves pressing experience and touch experience of the user, and ensures improvement of anti-fall and anti-impact reliability of the display 200. In addition, in a process of producing and preparing the support plate 40, a mold stripping avoidance space may be globally designed, to implement production of the integrated support plate 40. The support plate 40 may be prepared by using a computer numerical control (CNC, Computer Numerical Control) machine tool, or manufactured by using a mold, thereby improving mass production performance of the support plate 40.

The foregoing descriptions are merely specific implementations of this application, but the protection scope of this application is not limited thereto. Any variation or replacement readily figured out by a person skilled in the art within the technical scope disclosed in this application shall fall within the protection scope of this application. The embodiments of this application and features in the embodiments may be combined with each other when no conflict occurs. Therefore, the protection scope of this application shall be subject to the protection scope of the claims.

## Claims

1. A foldable mechanism, comprising: a base, a support plate, and a first main swing arm, wherein the support plate is an integrally formed structural member, the support plate is fixedly mounted on the base, the first main swing arm comprises a first sliding part, and the first sliding part is slidably and rotatably connected to the support plate.

2. The foldable mechanism according to claim 1, wherein a first mounting notch is disposed on the support plate, and the first mounting notch runs through the support plate in a thickness direction of the support plate;
the first sliding part is mounted in the first mounting notch, a first clearance notch is disposed on the first sliding part, the first clearance notch runs through the first sliding part in a thickness direction of the first sliding part, a first stopping block is further disposed on the first sliding part, the first stopping block is disposed on a bottom surface of the first sliding part and is spaced from the first clearance notch, the first stopping block comprises a first stopping surface, and the first stopping surface faces the first clearance notch;
a first stopping arm is disposed on the base, the first stopping arm extends into the first mounting notch, the first stopping arm comprises a second stopping surface, and the second stopping surface faces a bottom side of the base;
when the first main swing arm is unfolded relative to the base, the first clearance notch is communicated with the first mounting notch, and the first stopping arm further extends into the first clearance notch; and
when the first main swing arm is folded relative to the base, the first clearance notch is spaced from the first mounting notch, and the first stopping surface abuts against the second stopping surface.

3. The foldable mechanism according to claim 2, wherein the first mounting notch comprises a first bottom wall surface, and the first bottom wall surface faces an opening of the first mounting notch;
a first slider is further disposed on the support plate, the first slider is disposed on the first bottom wall surface, a first avoidance chute and a first avoidance notch are disposed on the first slider, an opening of the first avoidance chute is located on a top surface of the first slider, the first clearance chute avoids the first stopping block, and the first avoidance notch runs through the first slider in a thickness direction of the first slider, and is communicated with the first avoidance chute and the first mounting notch; and
the first stopping arm further extends into the first avoidance notch, the first avoidance notch is further communicated with the first clearance notch when the first main swing arm is unfolded relative to the base, and the first stopping block extends into the first avoidance notch when the first main swing arm is folded relative to the base.

4. The foldable mechanism according to claim 3, wherein the first mounting notch further comprises two first sidewall surfaces, the two first sidewall surfaces are spaced apart and disposed opposite to each other in a length direction of the support plate, and the first bottom wall surface is connected between the two first sidewall surfaces;
the first slider is located between the two first sidewall surfaces and is spaced from the two first sidewall surfaces;
two second sliders are further disposed on the support plate, and each of the first sliders is disposed on one of the first sidewall surfaces and is spaced from the first slider; and
the first sliding part is slidably and rotatably connected to the first slider and the two second sliders.

5. The foldable mechanism according to claim 4, wherein a first reinforcement rib is further disposed on the support plate, and the first reinforcement rib is located between one of the first sidewall surfaces and the first slider and is fixedly connected between the first bottom wall surface and the first slider.

6. The foldable mechanism according to claim 5, wherein a length of the first reinforcement rib gradually increases in a direction from the opening of the first mounting notch to the first bottom wall surface.

7. The foldable mechanism according to claim 5 or 6, wherein the first reinforcement rib and the second slider are spaced apart in the length direction of the support plate.

8. The foldable mechanism according to claim 5 or 6, wherein a first reinforcement block is further disposed on the support plate, the first reinforcement block is disposed on a bottom surface of the support plate, the first reinforcement block comprises two first surfaces, the two first surfaces face away from each other in the length direction of the support plate, and projections of the two first surfaces on a top surface of the support plate are located on two opposite sides that are respectively of the two first sidewall surfaces and that are opposite to each other, and are spaced from the two first sidewall surfaces.

9. The foldable mechanism according to claim 8, wherein there are at least two first reinforcement ribs, and two of the first reinforcement ribs are respectively connected to two opposite sides of the first slider in the length direction of the support plate; and
the first reinforcement block comprises two reinforcement sub-blocks, the two reinforcement sub-blocks are respectively connected to the two opposite sides of the first slider in the length direction of the support plate, each of the reinforcement sub-blocks comprises one of the first surfaces and a second surface, the first surface faces away from the first slider, the second surface and the first surface face away from each other in the length direction of the support plate, and a projection of the second surface on the support plate is located in the first slider.

10. The foldable mechanism according to claim 9, wherein the base comprises a shaft cover and a first bracket, a mounting groove is disposed on the shaft cover, an opening of the mounting groove is located on a top surface of the shaft cover, the first bracket is mounted in the mounting groove, a first fastening hole is disposed on the first bracket, and the first fastening hole runs through the first bracket in a thickness direction of the first bracket;
the support plate is fixedly mounted on top sides of the shaft cover and the first bracket, a second fastening hole is disposed on the support plate, an opening of the second fastening hole is located on the bottom surface of the support plate, and in the length direction of the support plate, and the second fastening hole is located between the two reinforcement sub-blocks, is spaced from the two reinforcement sub-blocks, and is communicated with the first fastening hole; and
the foldable mechanism further comprises a first fastener, and the first fastener passes through the first fastening hole and the second fastening hole and is fixedly connected to the first bracket and the support plate.

11. The foldable mechanism according to claim 10, wherein the shaft cover comprises a first side edge and a second side edge, and the first side edge and the second side edge are respectively located on two opposite sides of the mounting groove in a width direction of the shaft cover; and
a first side rib and a second side rib are disposed on the support plate, the first side rib and the second side rib are respectively disposed on two opposite sides of the support plate in a width direction of the support plate, the first side rib is lap-jointed with the first side edge, and the second side rib is lap-jointed with the second side edge.

12. The foldable mechanism according to claim 10 or 11, wherein a first positioning hole is further disposed on the support plate, and an opening of the first positioning hole is located on the bottom surface of the support plate; and
a first positioning column is disposed on the first bracket, and the first positioning column is disposed on a top surface of the first bracket and passes through the first positioning hole.

13. The foldable mechanism according to claim 10 or 11, wherein a second reinforcement block is disposed on the first bracket, the second reinforcement block is disposed on a top surface of the first bracket, a first avoidance groove is disposed on the second reinforcement block, an opening of the first avoidance groove is located on a top surface of the second reinforcement block, and the first avoidance groove avoids the first sliding part.

14. The foldable mechanism according to claim 10 or 11, wherein the mounting groove comprises a first groove sidewall surface and a second groove sidewall surface, and the first groove sidewall surface and the second groove sidewall surface are spaced apart and disposed opposite to each other in the width direction of the shaft cover; and
a first anti-torsion block and a second anti-torsion block are disposed on the shaft cover, the first anti-torsion block is disposed on the first groove sidewall surface and is spaced from the second groove sidewall surface, and the second anti-torsion block is disposed on the second groove sidewall surface and is spaced from the first anti-torsion block.

15. The foldable mechanism according to claim 1, wherein the foldable mechanism further comprises a second main swing arm, the second main swing arm comprises a second sliding part, and the second sliding part is slidably and rotatably connected to the support plate; and
when the foldable mechanism switches between an unfolded state and a folded state, a rotation direction of the first main swing arm relative to the base is a first direction, a rotation direction of the second main swing arm relative to the base is a second direction, and the first direction is opposite to the second direction.

16. The foldable mechanism according to claim 15, wherein a first pressing groove and a second pressing groove are disposed on the support plate, an opening of the first pressing groove and an opening of the second pressing groove are located on a bottom surface of the support plate, and the first pressing groove and the second pressing groove are spaced from each other in a width direction of the support plate; and
the foldable mechanism further comprises a first rotating shaft, a second rotating shaft, a first secondary swing arm, and a second secondary swing arm, the first rotating shaft is mounted in the first pressing groove, the second rotating shaft is mounted in the second pressing groove, the first secondary swing arm is sleeved on the first rotating shaft, is rotatably connected to the base, and is spaced from the first main swing arm, and the second secondary swing arm is sleeved on the second rotating shaft, is rotatably connected to the base, and is spaced from the second main swing arm.

17. The foldable mechanism according to claim 16, wherein the foldable mechanism comprises a first hinge member, a second hinge member, an assembly member, two third rotating shafts, a first elastic member, a second elastic member, and two third elastic members, the first hinge member, the second hinge member, and the assembly member are mounted on the base, are sleeved on the first rotating shaft and the second rotating shaft, and are sequentially spaced apart in a length direction of the base, the two third rotating shafts are mounted between the second hinge member and the assembly member, are located between the first rotating shaft and the second rotating shaft, and are spaced from the first rotating shaft and the second rotating shaft, the first elastic member is sleeved on the first rotating shaft, is located between the second hinge member and the assembly member, and is spaced from a groove wall surface of the first pressing groove, the second elastic member is sleeved on the second rotating shaft, is located between the second hinge member and the assembly member, and is spaced from a groove wall surface of the second pressing groove, and the two third elastic members are respectively sleeved on the two third rotating shafts and are located between the second hinge member and the assembly member; and
the first secondary swing arm is spaced from the first elastic member and is hinged with the first hinge member and the second hinge member, and the second secondary swing arm is spaced from the second elastic member and is hinged with the first hinge member and the second hinge member.

18. The foldable mechanism according to claim 17, wherein a third reinforcement block is disposed on the support plate, the third reinforcement block is disposed on the bottom surface of the support plate and is located between the first pressing groove and the second pressing groove, two second avoidance grooves are disposed on the third reinforcement block, openings of the two second avoidance grooves are located on a bottom surface of the third reinforcement block, and the two second avoidance grooves are located between the first pressing groove and the second pressing groove and respectively avoid the two third elastic members.

19. The foldable mechanism according to any one of claims 15 to 18, wherein the foldable mechanism further comprises a first door plate and a second door plate, the first door plate is slidably and rotatably connected to the first main swing arm, and the second door plate is slidably and rotatably connected to the second main swing arm; and
when the foldable mechanism is in the unfolded state, a top surface of the first door plate, a top surface of the second door plate, and a top surface of the support plate are flush with each other.

20. A foldable terminal, comprising a first housing, a second housing, and the foldable mechanism according to any one of claims 1 to 19, wherein the foldable mechanism is connected to the first housing and the second housing.
